# EUROPÄISCHE PATENTSCHRIFT

(11) **EP 3 286 258 B1**
(45) Veröffentlichungstag und Bekanntmachung des Hinweises auf die Patenterteilung: **09.06.2021**
(21) Anmeldenummer: 16720769.5
(22) Anmeldetag: 22.04.2016
(51) Int. Cl.: C08J 5/08

(54) **VERFAHREN ZUR HERSTELLUNG EINES FASERVERBUND-WERKSTOFFS AUS AMORPHEN, CHEMISCH MODIFIZIERTEN POLYMEREN MIT VERSTÄRKUNGSFASERN**
METHOD FOR PRODUCING A FIBRE-COMPOSITE MADE FROM AMORPHOUS, CHEMICALLY MODIFIED POLYMERS WITH REINFORCEMENT FIBRES
PROCÉDÉ POUR LA FABRICATION D'UN MATÉRIAU COMPOSITE FIBREUX CONSTITUÉ DE POLYMÈRES AMORPHES CHIMIQUEMENT MODIFIÉS AVEC DES FIBRES DE RENFORCEMENT

(30) Priorität: 22.04.2015 DE 102015207362
(43) Veröffentlichungstag der Anmeldung: 28.02.2018
(73) Patentinhaber: INEOS Styrolution Group GmbH, 60325 Frankfurt (DE)
(72) Erfinder: NIESSNER, Norbert, 67159 Friedelsheim (DE); JAHNKE, Eike, 1170 Aubonne (CH)
(74) Vertreter: Jacobi, Markus Alexander
(86) Internationale Anmeldenummer: PCT/EP2016/059069
(87) Internationale Veröffentlichungsnummer: WO 2016/170148

(56) Entgegenhaltungen:
- EP-A1- 1 923 420
- WO-A1-2008/110539
- WO-A1-2011/023541
- DE-A1- 2 160 778
- US-A- 5 008 145

## Beschreibung

Die vorliegende Erfindung betrifft ein Verfahren zur Herstellung von Faserverbund-Werkstoffen (auch Organobleche genannt), umfassend eine thermoplastische Form-masse A und mindestens eine Lage aus Verstärkungsfasern B, wobei die mindestens eine Lage der Verstärkungsfasern B in die Matrix mit der thermoplastischen Formmasse A eingebettet wird und wobei die thermoplastische Formmasse A mindestens eine chemisch reaktive Funktionalität aufweist, die Oberfläche von Verstärkungsfaser B mit einer Silan-Schlichte behandelt ist und die Konzentration an funktionellen Gruppen (chemisch reaktive Funktionalitäten) mindestens 0,3 Mol% aufweist.

Faserverbund-Werkstoffe bzw. Organobleche bestehen meist aus einer Vielzahl von Verstärkungsfasern, die in einer Polymer-Matrix eingebettet sind. Die Einsatzbereiche von Faserverbund-Werkstoffen sind vielfältig. Beispielsweise kommen Faserverbund-Werkstoffe im Fahrzeug- und Luftfahrt-Bereich zum Einsatz. Hierbei sollen Faserverbund-Werkstoffe das Zerreißen oder sonstige Fragmentierungen der Matrix verhindern, um somit die Unfallgefahr durch verteilte Bauteilfetzen zu vermindern. Viele Faserverbund-Werkstoffe sind in der Lage, bei Belastung vergleichsweise hohe Kräfte aufzunehmen, bevor es zum totalen Versagensfall kommt. Gleichzeitig zeichnen sich Faserverbund-Werkstoffe gegenüber herkömmlichen, nicht verstärkten Materialien durch eine hohe Festigkeit und Steifigkeit bei gleichzeitig niedriger Dichte und weiteren vorteilhaften Eigenschaften wie beispielsweise guter Alterungs- und Korrosionsbeständigkeit aus.

Festigkeit und Steifigkeit der Faserverbund-Werkstoffe sind dabei an die Belastungsrichtung und Belastungsart anpassbar. Hierbei sind in erster Linie die Fasern für die Festigkeit und Steifigkeit des Faserverbund-Werkstoffs verantwortlich. Zudem bestimmt auch ihre Anordnung die mechanischen Eigenschaften des jeweiligen Faserverbund-Werkstoffs. Die Matrix dient dagegen meist primär zum Einleiten der aufzunehmenden Kräfte in die einzelnen Fasern und zur Beibehaltung der räumlichen Anordnung der Fasern in der gewünschten Orientierung. Da sowohl die Fasern als auch die Matrix-Materialien variierbar sind, kommen zahlreiche Kombinationsmöglichkeiten von Fasern und Matrix-Materialien in Betracht.

Bei der Herstellung von Faserverbund-Werkstoffen spielt die Verbindung von Fasern und Polymer-Matrix zueinander eine wesentliche Rolle.

Auch die Festigkeit der Einbettung der Fasern in die Polymer-Matrix (Faser-Matrix-Haftung) kann erheblichen Einfluss auf die Eigenschaften des Faserverbund-Werkstoffs haben.

Zur Optimierung der Faser-Matrix-Haftung und um eine "geringe chemische Ähnlichkeit" zwischen den Faseroberflächen und der umgebenen Polymer-Matrix auszugleichen, werden Verstärkungsfasern regelmäßig vorbehandelt. Hierzu werden der sogenannten Schlichte regelmäßig Haftvermittler zugesetzt. Eine solche Schlichte (Schlichtemittel) wird regelmäßig während der Herstellung auf die Faser aufgebracht, um die Weiterverarbeitbarkeit der Fasern (wie Weben, Legen, Nähen) zu verbessern. Wenn die Schlichte für die spätere Weiterverarbeitung unerwünscht ist, muss sie erst in einem zusätzlichen Verfahrensschritt entfernt werden, etwa durch Herunterbrennen. In einigen Fällen werden Glasfasern auch ohne Schlichte verarbeitet.

Dann wird für die Herstellung des Faserverbund-Werkstoffs ein weiterer Haftvermittler in einem zusätzlichen Verfahrensschritt aufgebracht. Schlichte und/oder Haftvermittler bilden auf der Oberfläche der Fasern eine Schicht, welche die Wechselwirkung der Fasern mit der Umgebung wesentlich bestimmen kann. Heute steht eine Vielzahl unterschiedlicher Haftvermittler zur Verfügung. Der Fachmann kann je nach Anwendungsgebiet, zu verwendender Matrix und zu verwendenden Fasern einen geeigneten Haftvermittler auswählen, der mit der Matrix und mit den Fasern kompatibel ist.

Eine technische Herausforderung besteht darin, dass bei Eintritt des totalen Versagensfalls der Faserverbund-Werkstoff einen Sprödbruch erleiden kann. Folglich kann beispielsweise im Bau von Elementen, die einer hohen Belastung ausgesetzt sind, eine erhebliche Unfallgefahr von zerrissenen Bauteilen entstehen.

Daher ist es gewünscht, Faserverbund-Werkstoffe mit einem weiten Belastungsbereich, bei dem der totale Versagensfall unwahrscheinlich ist, bereitzustellen. Gewünscht sind zudem gute optische Eigenschaften, wie die Möglichkeit, mittels der Faserverbund-Werkstoffe verschiedene Elemente mit glatten Oberflächen herstellen zu können.

In WO 2008/058971 werden Formmassen beschrieben, welche Gruppe von Verstärkungsfasern verwenden. Die Gruppen von Verstärkungsfasern sind jeweils mit verschiedenen Haftvermittler-Komponenten versehen, welche die verschiedenen Faser-Matrix-Haftungen bewirken. Die zweite Faser-Matrix-Haftung ist geringer als die erste Faser-Matrix-Haftung, und die oberflächennahen Lagen von Verstärkungsfasern aus Verstärkungsfasern der ersten Gruppe sind mit größerer Faser-Matrix Haftung gebildet.

Als Matrixmaterialien werden Duroplasten wie Polyester und die Thermoplasten Polyamid und Polypropylen vorgeschlagen.

WO 2008/119678 beschreibt ein Glasfaser-verstärktes Styrol-Acrylnitril Copolymer (SAN), welches durch Verwendung von Maleinsäureanhydrid-Gruppen-haltiges Styrol-Copolymer und geschnittenen Glasfasern in seinen mechanischen Eigenschaften verbessert wird. Es wird daher der Einsatz von Kurzfasern gelehrt. Es wird jedoch kein Hinweis auf Faserverbund-Werkstoffe gegeben.

CN 102924857 beschreibt Mischungen aus Styrol-Maleinsäureanhydrid-Copolymeren, welche mit Schnittglas gemischt werden und dann relativ hohe Festigkeiten zeigen. Jedoch ist die Spannungsrissbeständigkeit eines solchen Materials gegenüber Lösungsmitteln zu gering. Auch die Festigkeit gegenüber Glasfaserverbunden ist deutlich zu niedrig.

CN 101555341 beschreibt Mischungen aus Acrylnitril-Butadien-Styrol (ABS), Glasfasern, Maleinsäureanhydrid-haltigen Polymeren und Epoxidharzen. Bei der Herstellung werden ABS und das Maleinsäureanhydrid-haltige Polymer vorgelegt, um zunächst das Epoxidharz zuzugeben und dann die Glasfasern. Die Fließfähigkeit einer solchen Mischung, enthaltend ein (duromeres) Epoxidharz, ist sehr beschränkt.

KR 100376049 lehrt Mischungen aus SAN, Maleinsäureanhydrid- und N-Phenylmaleinimid-haltigem Copolymer, geschnittenen Glasfasern und einem Aminosilanbasierten Kupplungsagens. Die Verwendung eines solchen Kupplungsagens führt zu zusätzlichen Verarbeitungsschritten und erhöht somit die Produktionskosten.

US 2011/0020572 beschreibt Organoblech-Bauteile mit einem Hybrid-Design aus beispielsweise einer hoch fließfähigen Polycarbonat-Komponente. Dabei wird Polycarbonat (PC) durch geeignete Additive fließfähig gemacht, wie über hyperverzweigte Polyester, Ethylen/(Meth)acrylat Copolymere oder niedermolekulare Polyalkylenglykolester. US 5,008,145 beschreibt glasfaserverstärkte Polyvinylchlorid-Blends.

EP-A 2 251 377 beschreibt Organobleche auf Basis von Einzelfasern bzw. Faserrovings.

WO 2011/023541 und WO 2008/110539 beschreiben die Herstellung von glasfaserverstärkten SAN-Copolymeren, insbesondere mit Einzelfasern und Rovings. EP-A 1 923 420 beschreibt faserverstärkte Kunststoffteile, die Fasern unterschiedlich starker Anhaftung enthalten.

(Glas-)Fasern werden im Stand der Technik häufig mit einer Schlichte behandelt, welche vor allem die Fasern gegenseitig schützen. So zeigt bereits DE-A 2160778 glasfaserverstärkte Styrol-Polymere mit Schlichte-behandelten Fasern. Ein gegenseitiges Beschädigen durch Abrieb soll verhindert werden. Beim gegenseitigen mechanischen Einwirken soll es nicht zur Querfragmentierung (Bruchbildung) kommen.

Ferner kann mittels der Schlichte der Schneidevorgang der Faser erleichtert werden, um vor allem eine gleiche Stapellänge zu erhalten. Daneben kann durch die Schlichte eine Agglomeration der Fasern vermieden werden. Die Dispergierbarkeit von Kurzfasern in Wasser kann verbessert werden. Somit ist es möglich, gleichmäßige Flächengebilde nach dem Naßlegeverfahren zu erhalten.

Eine Schlichte kann dazu beitragen, dass ein verbesserter Zusammenhalt zwischen den Glasfasern und der Polymer-Matrix, in welcher die Glasfasern als Verstärkungsfasern wirken, hergestellt wird. Dieses Prinzip findet vor allem bei den glasfaserverstärken Kunststoffen (GFK) Anwendung.

Bislang enthalten die Glasfaser-Schlichten generell eine große Anzahl an Bestandteilen, wie beispielsweise Filmbildner, Gleitmittel, Netzmittel und Haftvermittler.

Ein Filmbildner schützt die Glasfilamente vor gegenseitiger Reibung und kann zusätzlich eine Affinität zu Kunstharzen verstärken, um somit die Festigkeit und den Zusammenhalt eines Verbundwerkstoffes zu fördern. Stärkederivate, Polymere und Copolymer von Vinylacetat und Acrylestern, Epoxidharz-Emulsionen, Polyurethanharze und Polyamide mit einem Anteil von 0,5 bis 12 Gew.-%, bezogen auf die gesamte Schlichte, sind zu nennen.

Ein Gleitmittel verleiht den Glasfasern und deren Produkten Geschmeidigkeit und vermindert die gegenseitige Reibung der Glasfasern, sowie bei der Herstellung. Oftmals wird jedoch die Haftung zwischen Glas und Kunstharz durch die Verwendung von Gleitmitteln beeinträchtigt. Fette, Öle und Polyalkylenamine in einer Menge von 0,01 bis 1 Gew.-%, bezogen auf die gesamte Schlichte, sind zu nennen.

Ein Netzmittel bewirkt eine Herabsetzung der Oberflächenspannung und eine verbesserte Benetzung der Filamente mit der Schlichte. Für wässrige Schlichten sind beispielsweise Polyfettsäureamide mit einer Menge von 0,1 bis 1,5 Gew.-%, bezogen auf die gesamte Schlichte, zu nennen.

Oftmals existiert keine geeignete Affinität zwischen der Polymer-Matrix und den Glasfasern. Diese Überbrückung können Haftvermittler übernehmen, welche die Adhäsion von Polymeren an der Faseroberfläche erhöhen. Die meisten organofunktionellen Silane, wie beispielsweise Aminopropyltriethoxysilan, Methacryloxypropyltrimethoxysilan, Glycidyloxypropyltrimethoxysilan und ähnliche sind zu nennen.

Silane, welche einer wässrigen Schlichte zugesetzt werden, werden meist zu Silanolen hydrolysiert. Diese Silanole können dann mit reaktiven (Glas-)Faseroberflächen reagieren und somit eine Haftmittelschicht (mit einer Dicke von ca. 3 nm) bilden.

Folglich können niedermolekulare, funktionale Agenzien mit Silanolgruppen auf der Glasoberfläche reagieren, wobei diese niedermolekularen Agenzien anschließend weiterreagieren (beispielsweise in Epoxidharzen) und dabei für eine chemische Anbindung der Glasfaser an die Polymer-Matrix sorgen. Eine solche Herstellung ist jedoch zeitaufwändig und dauert bis zur vollständigen Aushärtung der Polymere (beispielsweise der oben genannten Epoxidharze) ungefähr zwischen 30 Minuten bis über eine Stunde.

Es erscheint daher wünschenswert, in einem verbesserten Verfahren bereits polymerisierte Schmelzen in Verbindung mit Glasfasern oder anderen Verstärkungsfasern zu bringen.

Eine Funktionalisierung durch Umsetzung mit Polymeren ist ebenfalls bekannt. So gelingt es, durch Verwendung niedermolekularer Polycarbonat-Typen das Glasfasergewebe bzw. -gelege gut zu tränken und durch Reaktion von funktionellen Gruppen auf der Glasfaseroberfläche mit dem Polycarbonat eine "Pfropfung" durchzuführen, welche die Verträglichkeit zum Polymer erhöht. Diese Verfahrensweise hat jedoch den Nachteil, dass Polycarbonat (PC) eine sehr hohe Viskosität besitzt und für diesen Imprägnierschritt niedermolekulares, d.h. niedrigviskoses PC eingesetzt werden muss, welches eine äußerst schlechte Gebrauchstauglichkeit, wie beispielsweise eine geringe Resistenz gegenüber Spannungsriss auslösenden Agenzien, wie polare Lösungsmittel, aufweist.

Eine technische Aufgabe der Erfindung ist es, ein Verfahren zur Herstellung eines Faserverbund-Werkstoffs (Organoblech), der geeignete Eigenschaften zur Herstellung von Formkörpern, Folien und Beschichtungen aufweist, bereitzustellen. Der Faserverbund-Werkstoff sollte auf einem leicht zu verarbeitenden, gegen herkömmliche Lösemittel weitgehend inerten, gut spannungsrissbeständigen, festen Verbundwerkstoff basieren und eine glatte Oberflächen aufweisen. Idealerweise kommt der Faserverbund-Werkstoff ohne Haftvermittler aus. Gegenstand der Erfindung ist ebenfalls ein Faserverbund-Werkstoff, welcher erhältlich aus dem erfindungsgemäßen Verfahren ist bzw. erhalten wird.

Es hat sich überraschend gezeigt, dass ein Faserverbund-Werkstoff, enthaltend mindestens eine spezielle thermoplastische Formmasse A als Matrix, mindestens eine Lage aus vorbehandelten Verstärkungsfasern B, und optional mindestens ein Additiv C, einen Werkstoff ergibt, welcher eine gute Festigkeit aufweist und spannungsriss- und lösungsmittelbeständig ist.

Gelehrt wird ein Verfahren zur Herstellung eines thermoplastischen Faserverbund-Werkstoffs enthaltend eine thermoplastischen Formmasse A als Polymer-Matrix M, Verstärkungsfasern B, sowie optional mindestens ein Additiv C, umfassend die Schritte:
i) Bereitstellen von Flächengebilden F aus, mit einer Silan-Schlichte behandelten Verstärkungsfasern B,
ii) Einbringen der Flächengebilde F in eine thermoplastische Formmasse A, welche mindestens 0,3 Mol-%, bezogen auf Komponente A, einer chemisch reaktiven Funktionalität (in Form funktioneller Monomere) aufweist,
iii) Reaktion von chemisch reaktiven Gruppen der thermoplastischen Formmasse A in der Polymer-Matrix M mit den polaren Gruppen an der Oberfläche der behandelten Verstärkungsfasern B,
iv) optionale Einarbeitung des mindestens einen Additivs C und Konsolidierung des Faserverbund-Werkstoffs,
v) Abkühlen und ggf. weitere Verfahrensschritte.

Der Gegenstand der Erfindung ist gemäß den Ansprüchen definiert.

Gegenstand der Erfindung ist ein Verfahren zur Herstellung eines thermoplastischen Faserverbund-Werkstoffs, wobei der Faserverbund-Werkstoff hergestellt wird aus:
a) 30 bis 95 Gew.-%, oftmals 38 bis 75 Gew.-%, der thermoplastischen Formmasse A als Polymer-Matrix,
b) 5 bis 70 Gew.-%, oftmals 24,9 bis 61,9 Gew.-%, der Flächengebilde F aus Verstärkungsfasern B, und
c) 0 bis 40 Gew.-%, oftmals 0,1 bis 25 Gew.-%, an Additiv C.

Dem Fachmann wird verständlich sein, dass die thermoplastische Formmasse A erfindungsgemäß mindestens ein (Co)polymer umfasst, das mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert. Ein solches (Co)polymer umfasst mindestens ein funktionelles Monomer A-I, dessen Funktionalität während des Herstellungsprozesses des Faserverbund-Werkstoffs mit chemischen Gruppen an der Oberfläche der Verstärkungsfaser-Komponente B reagiert. Das Monomer A-I umfassende (Co)polymer wird hierin auch als Polymer-Komponente (A-a) bezeichnet.

Optional kann die thermoplastische Formmasse A noch ein oder mehrere (Co)polymere enthalten die wahlweise auch frei von einer solchen chemisch reaktiven Funktionalität sind (daher kein funktionales Monomer A-I enthalten) und somit während des Herstellungsprozesses des Faserverbund-Werkstoffs nicht mit chemischen Gruppen an der Oberfläche der Verstärkungsfaser-Komponente B reagieren. Ein solches (Co)polymer wird hierin auch als Polymer-Komponente (A-b) bezeichnet.

Gegenstand der Erfindung ist auch ein Verfahren zur Herstellung eines thermoplastischen Faserverbund-Werkstoffs, wobei der Faserverbund-Werkstoff hergestellt wird aus:
a) 30 bis 70 Gew.-%, einer thermoplastischen Formmasse A,
b) 29 bis 69 Gew.-%, der Flächengebilde F aus Verstärkungsfasern B, und
c) 1 bis 20 Gew.-% an Additiv C.

Gegenstand der Erfindung ist auch ein Verfahren zur Herstellung eines thermoplastischen Faserverbund-Werkstoffs, wobei die als Matrix M eingesetzte thermoplastische Formmasse A amorph ist.

Das Verfahren kann zu zur Herstellung eines (teilweise) lichtdurchlässigen und/oder bedruckbaren Faserverbund-Werkstoffs verwendet werden.

Gegenstand der Erfindung ist auch ein Verfahren zur Herstellung eines thermoplastischen Faserverbund-Werkstoffs, wobei die als Polymer-Matrix M eingesetzte thermoplastische Formmasse A amorph ist und ausgewählt ist aus einer, durch eine chemisch reaktive Funktionalität modifizierte Gruppe von Copolymeren auf Basis von: Styrol-Acrylnitril-Copolymeren, alpha-Methylstyrol-Acrylnitril-Copolymeren, schlagzäh modifizierte Acrylnitril-Styrol-Copolymere, insbesondere Acrylnitril-Butadien-Styrol-Copolymeren und Acrylnitril-Styrol-Acrylester-Copolymeren, sowie Blends der genannten Copolymere mit Polycarbonat oder Polyamid.

Es wird verstanden werden, dass erfindungsgemäß mindestens eine der (Co)polymer-Komponenten der thermoplastischen Formmasse A ein (Co)polymer darstellt, das mindestens eine chemisch reaktive Funktionalität wie hierin beschrieben aufweist (Polymer-Komponente (A-a)). Jede der im vorangehenden Absatz genannten Copolymer-Komponenten kann demnach zusätzlich zu den explizit genannten Monomeren auch eine reaktive Funktionalität aufweisen, die während der Herstellung des Faserverbund-Werkstoffs mit der Oberfläche der Fasern B reagieren kann. Somit kann jeder der vorstehend genannten (Co)polymere auch eine Polymer-Komponente (A-a) darstellen.

Entsprechend werden die vorstehend genannten Polymer-Komponenten in ihrer Verwendung als Polymer-Komponente (A-a) in der Regel auch mindestens ein Monomer A-I, das die chemisch reaktive Funktionalität (daher die Reaktion mit Fasern B) vermittelt, umfassen. Dann können diese auch bezeichnet werden als beispielsweise: Polystyrol-(A-I)-Copolymer, Styrol-Acrylnitril-(A-I)-Copolymer, α-Methylstyrol-Acrylnitril-(A-I)-Copolymer, schlagzäh modifiziertes Acrylnitril-Styrol-(A-I)-Copolymer, insbesondere Acrylnitril-Butadien-Styrol-(A-I)-Copolymer (ABS-(A-I)) und Acrylnitril-Styrol-Acrylester-(A-I)-Copolymer (ASA-(A-I)). Auch Blends der genannten Copolymere mit Polycarbonat oder Polyamid sind möglich.

Optional können die vorstehend genannten Polymer-Komponenten in ihrer Verwendung als Polymer-Komponente (A-a) auch noch zusätzlich ein zweites Monomer (oder sogar noch ein drittes Monomer) umfassen, das die chemisch reaktive Funktionalität vermittelt.

Beispielhaft können daher die vorstehend genannten Polymer-Komponenten (in ihrer Verwendung als Polymer-Komponente (A-a)) im Falle der Verwendung von Maleinsäureanhydrid (MA) als Monomer A-I auch bezeichnet werden als beispielsweise: Polystyrol-Maleinsäureanhydrid-Copolymer, Styrol-Acrylnitril-Maleinsäureanhydrid-Copolymer, α-Methylstyrol-Acrylnitril-Maleinsäureanhydrid-Copolymer, schlagzäh modifiziertes Acrylnitril-Styrol-Maleinsäureanhydrid-Copolymer, insbesondere Acrylnitril-Butadien-Styrol-Maleinsäureanhydrid-Copolymer (ABS-MA) und Acrylnitril-Styrol-Acrylester-Maleinsäureanhydrid-Copolymer (ASA-MA). Auch Blends der genannten Copolymere mit Polycarbonat oder Polyamid sind möglich. Es wird verstanden werden, dass entsprechendes auch für andere Monomere A-I gilt.

Optional können ein oder mehrere beliebige weitere (Co)polymere ohne eine solche Funktionalität (als Polymer-Komponente (A-b)) zusätzlich zu der einen oder den mehreren Polymer-Komponente(n) (A-a) eingesetzt werden. Auch hier können beispielhaft die vorstehend genannten (Co)polymere (daher Polystyrol, Styrol-Acrylnitril-Copolymere, α-Methylstyrol-Acrylnitril-Copolymere, schlagzäh modifizierte Acrylnitril-Styrol-Copolymere, insbesondere Acrylnitril-Butadien-Styrol-Copolymere (ABS) und Acrylnitril-Styrol-Acrylester-Copolymere (ASA), sowie Blends der genannten Copolymere mit Polycarbonat oder Polyamid), dann jedoch ohne die Funktionalität (daher ohne reaktives Monomer A-I), eingesetzt werden.

Besonders bevorzugt basiert die Polymer-Komponente (A-a) der thermoplastischen Formmasse A auf einem SAN-Copolymer.
Der Fachmann erkennt, dass das SAN-Copolymer dann zusätzlich ein Monomer A-I umfasst, das während dem Herstellungsprozess mit der Oberfläche der Fasern B reagiert. Entsprechend kann das SAN-Copolymer in seiner Verwendung als Polymer-Komponente (A-a) auch ein SAN-(M-I)-Copolymer (= SAN-(M-I)-Terpolymer) sein, beispielhaft ein SAN-MA-Copolymer (= SAN-MA-Terpolymer).

Gegenstand der Erfindung ist auch ein Verfahren zur Herstellung eines thermoplastischen Faserverbund-Werkstoffs, wobei die als Polymer-Matrix M eingesetzte thermoplastische Formmasse A Polystyrol (glasklar "PS" oder schlagfest, beispielsweise "HIPS") ist.

Dabei bedeutet das Merkmal "durch eine chemisch reaktive Funktionalität modifiziert", dass das Copolymer auch solche Monomere (als Baustein) enthält, die im Copolymer zu reaktiven chemischen Gruppen führen, beispielsweise durch Einbau von Maleinsäureanhydrid-Monomeren in die Polymerkette.

Gegenstand der Erfindung ist auch ein Verfahren zur Herstellung eines thermoplastischen Faserverbund-Werkstoffs, wobei die thermoplastische Formmasse A besteht aus, durch einer chemisch reaktive Funktionalität, insbesondere Maleinsäureanhydrid (MSA), modifizierte Styrol-Acrylnitril-Copolymeren und/oder alpha-Methylstyrol-Acrylnitril-Copolymeren.

Gegenstand der Erfindung ist auch ein Verfahren zur Herstellung eines thermoplastischen Faserverbund-Werkstoffs, wobei die chemisch reaktive Funktionalität der thermoplastischen Formmasse A basiert auf Komponenten ausgewählt aus der Gruppe bestehend aus: Maleinsäureanhydrid, N-Phenylmaleinimid, tert.-Butyl(meth)acrylate und Glycidyl(meth)acrylat, bevorzugt ausgewählt aus der Gruppe bestehend aus: Maleinsäureanhydrid, N-Phenylmaleinimid und Glycidyl(meth)acrylat.

Gegenstand der Erfindung ist auch ein Verfahren zur Herstellung eines thermoplastischen Faserverbund-Werkstoffs, wobei die Oberfläche der Verstärkungsfasern B eine oder mehrere der Funktionen aus der Gruppe Hydroxy-, Ester- und Amino-Gruppen enthält.

Gegenstand der Erfindung ist auch ein Verfahren zur Herstellung eines thermoplastischen Faserverbund-Werkstoffs, wobei zur Herstellung von Formmasse A 0,5 bis 5 Gew.-% Monomere A-I, bezogen auf Komponente A, eingesetzt werden, welche eine chemisch reaktive Funktionalität aufweisen.

Erfindungsgemäß liegen die Fasern B als Flächengebilde F (Gewebe, Matten, Vliese, Gelege oder Gewirke) vor. Es wird gelehrt, dass sie alternativ auch als Endlosfasern (einschließlich Fasern die das Produkt einer Einzelfaserverdrillung sind) vorliegen können.

Gegenstand der Erfindung ist daherein Verfahren zur Herstellung eines thermoplastischen Faserverbund-Werkstoffs, wobei das Flächengebilde F ein Gewebe, ein Gelege, eine Matte, ein Vlies oder ein Gewirke ist.

Die Fasern B sind daher bevorzugt keine Kurzfasern ("chopped fibers") und der Faserverbund-Werkstoff ist bevorzugt kein kurzglasfaserverstärkter Werkstoff. Mindestens 50 % der Fasern B weisen dabei bevorzugt eine Länge von mindestens 5 mm, stärker bevorzugt mindestens 10 mm oder mehr als 100 mm, auf. Die Länge der Fasern B hängt auch von der Größe des Formteils T ab, das aus dem Faserverbund-Werkstoff hergestellt wird.

Gemäß einer bevorzugten Ausführungsform sind die Fasern B schichtweise in den Faserverbund-Werkstoff eingebettet, bevorzugt als Gewebe oder Gelege, insbesondere als Gewebe, in den Faserverbund-Werkstoff eingebettet.

Dem Fachmann ist bekannt, dass sich Gewebe, Matten, Vliese, Gelege oder Gewirke von Kurzfasern unterscheiden, da bei ersteren zusammenhängende, größere Flächengebilde F entstehen, die in der Regel länger als 5 mm sein werden. Der Fachmann weiß, dass hierbei die Flächengebilde F bevorzugt so vorliegen, dass sie den Faserverbund-Werkstoff (weitgehend) durchziehen. Daher liegen die Flächengebilde F bevorzugt so vor, dass sie den Faserverbund-Werkstoff (weitgehend) durchziehen. Weitgehend durchziehen bedeutet hierbei, dass die Flächengebilde F bzw. Endlosfasern mehr als 50%, bevorzugt mindestens 70%, insbesondere mindestens 90%, der Länge des Faserverbund-Werkstoffs durchziehen. Die Länge des Faserverbund-Werkstoffs ist hierbei die größte Ausdehnung in einer der drei Raumrichtungen. Stärker bevorzugt durchziehen die Flächengebilde F bzw. Endlosfasern mehr als 50%, bevorzugt mindestens 70%, insbesondere mindestens 90%, der Fläche des Faserverbund-Werkstoffs. Die Fläche ist hierbei die Fläche der größten Ausdehnung in zwei der drei Raumrichtungen. Der Faserverbund-Werkstoffs ist bevorzugt (weitgehend) flächig.

Gegenstand der Erfindung ist auch ein Verfahren zur Herstellung eines thermoplastischen Faserverbund-Werkstoffs, wobei Komponente A hergestellt wird aus 65 bis 80 Gew.-% (a-Methyl)Styrol, 19,7 bis 32 Gew.-% Acrylnitril und 0,3 bis 3 Gew.-% Maleinsäureanhydrid, und wobei das Flächengebilde F ein Gewebe, ein Gelege, eine Matte, ein Vlies oder ein Gewirke ist.

Besonders bevorzugt liegt der Gehalt an Maleinsäureanhydrid in der Komponente A bei 0,2 bis 2 Gew.-%, noch stärker bevorzugt bei 0,33 bis (etwa) 1 Gew.-%, insbesondere bei (etwa) 1 Gew.-% (daher 0,5 bis 1,49 Gew.%), wie aus den experimentellen Beispielen ersichtlich ist.

Gegenstand der Erfindung ist auch ein Verfahren zur Herstellung eines thermoplastischen Faserverbund-Werkstoffs, wobei die Verstärkungsfasern B aus Glasfasern bestehen, welche als chemisch reaktive Funktionalität Silangruppen an der Oberfläche enthalten.

Gegenstand der Erfindung ist auch ein Verfahren zur Herstellung eines thermoplastischen Faserverbund-Werkstoffs, wobei die Verstärkungsfasern B aus Glasfasern bestehen, welche als chemisch reaktive Funktionalität Silanolgruppen an der Oberfläche enthalten.

Gegenstand der Erfindung ist auch ein Verfahren zur Herstellung eines thermoplastischen Faserverbund-Werkstoffs, wobei der Faserverbund-Werkstoff eine Verrippung oder einen Sandwichaufbau aufweist. Die Verfahrensschritte zur Verrippung sind dem Fachmann bekannt, u. a. um Problemen, die durch grosse Wanddicken in Formteilen entstehen, aus dem Wege zu gehen. Die Verrippung bietet, bei gleichzeitiger Verringerung der Wanddicke, ein geeignetes Mittel zur Steifigkeitserhöhung. Die Verbesserung der Bauteilsteifigkeit durch eine Verrippung wird durch die Vergrößerung des Flächenträgheitsmomentes begründet. Generell beinhaltet die verbesserte Rippendimensionierung auch produktionstechnische und konstruktive Gesichtspunkte.

Gegenstand der Erfindung ist auch ein Verfahren zur Herstellung eines thermoplastischen Faserverbund-Werkstoffs, wobei der Faserverbund-Werkstoff schichtartig aufgebaut ist und mehr als zwei Schichten enthält.

Beispielhaft können die weiteren Schichten gleichartig oder auch andersartig aufgebaut sein als die oben beschriebenen. In einer bevorzugten Ausführungsform betrifft die Erfindung die Verwendung eines wie oben beschriebenen thermoplastischen Faserverbund-Werkstoffs, wobei der Faserverbund-Werkstoff schichtartig aufgebaut ist und mehr als zwei, oftmals mehr als drei Schichten enthält. Beispielhaft können alle Schichten gleichartig und erfindungsgemäß sein oder manche der Schichten können andersartig aufgebaut sein als die erfindungsgemäßen.

Gegenstand der Erfindung ist auch ein Verfahren zur Herstellung eines thermoplastischen Faserverbund-Werkstoffs, wobei die Temperatur bei der Herstellung des Faserverbund-Werkstoffs (insbesondere bei Schritt (iii)) mindestens 200 °C, bevorzugt mindestens 250 °C und besonders bevorzugt mindestens 300 °C beträgt.

Gegenstand der Erfindung ist auch ein Verfahren zur Herstellung eines thermoplastischen Faserverbund-Werkstoffs, wobei die Verweildauer bei der Herstellung des Faserverbund-Werkstoffs bei Temperaturen von mindestens 200 °C bei maximal 10 Minuten, bevorzugt maximal 5 Minuten, besonders bevorzugt maximal 2 Minuten und insbesondere bei maximal 1 Minute liegt. Die thermische Behandlung dauert oftmals von 10 bis 60 Sekunden.

Die Erfindung betrifft auch einen wie oben beschrieben hergestellten Faserverbund-Werkstoff. Die Erfindung betrifft auch Verwendung eines wie oben beschrieben hergestellten Faserverbund-Werkstoffs zur Herstellung von Formkörpern, Folien und Beschichtungen.

### Komponente A

Der Faserverbund-Werkstoff enthält mindestens 20 Gew.-%, in der Regel mindestens 30 Gew.-%, bezogen auf das Gesamtgewicht des Faserverbund-Werkstoffs, der thermoplastischen Matrix M bzw. der thermoplastischen Formmasse A.
Die thermoplastische Matrix M, die die thermoplastische Formmasse A enthält, ist in dem Faserverbund-Werkstoff bevorzugt von 30 bis 95 Gew.-%, besonders bevorzugt von 32 bis 90, ganz besonders bevorzugt von 35 bis 80 Gew.-%, oftmals von 38 bis 75 Gew.-% und insbesondere von 38 bis 70 Gew.-%, bezogen auf den Faserverbund-Werkstoff, vorhanden. Bevorzugt entspricht die thermoplastische Matrix M der thermoplastischen Formmasse A.

Bevorzugt besteht die thermoplastische Formmasse A hauptsächlich (zu mehr als 50%) aus Polystyrol oder einem Copolymer (A-1). Gemäß einer Ausführungsform besteht die thermoplastische Formmasse A zu mindestens 75 Gew.-%, bevorzugt zu mindestens 90 Gew.-% aus dem Copolymer A-1. Die thermoplastische Formmasse A kann auch nur aus Copolymer A-1 bestehen.

Für einen erfindungsgemäßen Faserverbund-Werkstoff kommen als thermoplastische Formmasse A zwar beliebige thermoplastische Kunststoffe in Frage, insbesondere jedoch werden Styrol-Copolymere, insbesondere SAN, SMMA (Styrol-Methylmethacrylat-Copolymere), ABS und ASA eingesetzt, sowie Polystyrol (glasklar = "PS") oder auch schlagfestes Polystyrol (= high impact polystyrene, "HIPS").

Wie oben bereits ausgeführt, wird der Fachmann verstehen, dass erfindungsgemäß mindestens eine der (Co)polymer-Komponenten der thermoplastischen Formmasse A ein (Co)polymer darstellt, das mindestens eine chemisch reaktive Funktionalität wie hierin beschrieben aufweist (Polymer-Komponente (A-a)). Bevorzugt wird demnach, dass mindestens eine der vorstehend genannten Polymer-Komponenten (daher mindestens ein (ggf. modifiziertem) Polystyrol und/oder mindestens ein Copolymer A-1 (Styrol-Copolymer, insbesondere SAN, SMMA, ABS und ASA)) mindestens ein Monomer A-I umfasst.

Beispielhaft, im Falle der Verwendung von Maleinsäureanhydrid (MA) als Monomer A-I, kann das Polystyrol daher ein Polystyrol-Maleinsäureanhydrid-Copolymer (S-MA), das Copolymer A-1 beispielhaft Styrol-Acrylnitril-Maleinsäureanhydrid-Copolymer (SAN-MA), Styrol-Methylmethacrylat-Maleinsäureanhydrid-Copolymer (SMMA-MA), Acrylnitril-Butadien-Styrol-Maleinsäureanhydrid-Copolymer (ABS-MA), Acrylester-Styrol-Acrylnitril-Maleinsäureanhydrid-Copolymer (ASA-MA) sein.

Optional können zusätzlich zu der mindestens einen Polymer-Komponente (A-a) ein oder mehrere beliebige weitere (Co)polymere ohne eine solche Funktionalität (als Polymer-Komponente (A-b)) eingesetzt werden. Es wird verstanden werden, dass dies optional auch Polystyrol, SAN, SMMA, ABS und/oder ASA (jeweils kein Monomer A-I umfassend) sein kann.

Die thermoplastische Formmasse A (Komponente A) ist bevorzugt eine amorphe Formmasse, wobei amorpher Zustand der thermoplastischen Formmasse (Thermoplast) bedeutet, dass die Makromoleküle ohne regelmäßige Anordnung und Orientierung, d.h. ohne gleich bleibenden Abstand, völlig statistisch angeordnet sind.

Bevorzugt weist die gesamte thermoplastische Formmasse A amorphe, thermoplastische Eigenschaften auf, ist daher schmelzbar und (weitgehend) nicht kristallin. Dadurch ist der Schrumpf der thermoplastische Formmasse A, und daher auch des gesamten Faserverbund-Werkstoffs, vergleichsweise gering. Es können besonders glatte Oberflächen bei den Formteilen erhalten werden.

Alternativ enthält die Komponente A einen teil-kristallinen Anteil von kleiner 60 Gew.-%, bevorzugt kleiner 50 Gew.-%, besonders bevorzugt kleiner 40 Gew.-%, bezogen auf das Gesamtgewicht von Komponente A. Teilkristalline Thermoplasten bilden sowohl chemisch regelmäßige, als auch geometrische Bereiche aus, d. h. es gibt Bereiche, in denen sich Kristalliten bilden. Kristalliten sind Parallelbündelungen von Molekülabschnitten oder Faltungen von Molekülketten. Einzelne Kettenmoleküle können dabei teilweise den kristallinen oder den amorphen Bereich durchlaufen. Sie können manchmal sogar mehreren Kristalliten gleichzeitig angehören.

Die thermoplastische Formmasse A kann auch ein Blend von amorphen thermoplastischen Polymeren und teilkristallinen Polymeren sein.

Die thermoplastische Formmasse A kann z.B. ein Blend eines (ggf. A-I-enthaltenen) Styrol-Copolymers (wie modifiziertes SAN) mit einem oder mehreren Polycarbonat(en) und/oder einem oder mehreren teilkristallinen Polymeren (wie Polyamid) sein, wobei der Anteil teilkristalliner Mischkomponenten an der gesamten Komponente A kleiner als 50 Gew.-%, bevorzugt kleiner 40 Gew.-% sein sollte.

Erfindungsgemäß enthält die eingesetzte thermoplastische Formmasse A mindestens ein Copolymer A-1, das Monomere A-I umfasst, die mit den funktionellen Gruppen B-I der eingebetteten Verstärkungsfasern B kovalente Bindungen eingehen. Der Anteil an Monomeren A-I in der thermoplastischen Formmasse A kann variabel gewählt sein. Je höher der Anteil an Monomeren A-I und der funktionellen Gruppen (B-I) ist, desto stärker kann auch die Bindung zwischen der thermoplastischen Formmasse A und den Verstärkungsfasern B sein. Monomere A-I können in Copolymer A-1 noch als Monomere vorliegen oder in das Copolymer A-1 integriert sein. Vorzugsweise sind die Monomere A-I in das Copolymer A-1 integriert.

Gemäß einer bevorzugten Ausführungsform ist das Copolymer A aufgebaut mit einem Anteil an Monomeren A-I von mindestens 0,3 Gew.-%, bevorzugt von mindestens 0,5 Gew.-%, z.B. 0,5 bis 5 Gew.-%, insbesondere von mindestens 1 Gew.-%, z.B. 1 bis 3 Gew.-%, bezogen auf Copolymer A.

Die Konzentration an funktionellen Gruppen (chemisch reaktive Funktionalität) beträgt mindestens 0,3 Mol%, bevorzugt mindestens 0,5 Mol%, insbesondere 1 Mol%, z.B. 1 bis 3 Mol%, bezogen auf 100 Mol% Monomere, welche zur Herstellung der thermoplastischen Formmasse A eingesetzt werden.

Gemäß einer bevorzugten Ausführungsform sind funktionelle Gruppen der thermoplastischen Formmasse A ausgewählt aus der Gruppe bestehend aus Anhydrid-, Ester-, Carboxy-, Amid-, Imid-, Acrylat- und Glycidyl-Gruppen.

Als Monomere A-I, die mit den funktionellen Gruppen B-I der Fasern B kovalente Bindungen eingehen können, kommen alle Monomere in Frage, die derartige Eigenschaften aufweisen. Bevorzugt sind dabei als Monomere A-I solche, die durch Reaktion mit Hydroxy- oder Aminogruppen kovalente Bindungen eingehen können.

Bevorzugt, weisen die Monomere A-I auf:
(a) mindestens eine Funktionalität, die in der Lage ist, mit den funktionellen Gruppen B-I der Oberfläche der Fasern B (etwa durch Reaktion mit Hydroxyl- und/oder Aminogruppen) kovalente Bindungen einzugehen; und
(b) mindestens eine zweite Funktionalität, die in der Lage ist in das Copolymer A-1 eingebunden zu werden, beispielsweise eine Doppelbindung, bevorzugt eine endständige Doppelbindung, die mittels radikalischer Polymerisation in das Copolymer A-1 eingebunden wird.

Optional kann das Copolymer A-1 oder auch ein anderes in der thermoplastischen Formmasse A enthaltenes (Co)polymer ein oder mehrere weitere Monomere enthalten, die in der Lage sind, mit den Fasern B kovalente oder nicht-kovalente Bindungen einzugehen.

Gemäß einer bevorzugten Ausführungsform sind die Monomere A-I ausgewählt aus der Gruppe bestehend aus:
Maleinsäureanhydrid (MA),
N-Phenylmaleimid (PM),
tert.-Butyl(meth)acrylat und
Glycidyl(meth)acrylat (GM).

Gemäß einer stärker bevorzugten Ausführungsform sind die Monomere A-I ausgewählt aus der Gruppe bestehend aus Maleinsäureanhydrid (MA), N-Phenylmaleimid (PM) und Glycidyl(meth)acrylat (GM).

Es können auch zwei dieser Monomere A-I im Copolymer A-1 enthalten sein.

Das Copolymer A-1 der thermoplastischen Formmasse A kann optional weitere funktionelle Monomere A-II beinhalten. Beispiele für Copolymere A-1 sind Styrol/Maleinsäureanhydrid, Styrol/Acrylnitril/Maleinsäureanhydrid, Styrol/Glycidylmethacrylat, Styrol/N-Phenylmaleimid, Styrol/Acrylnitril/N-Phenylmaleimid, Methylmethacrylat/N-Phenylmaleimid, Methylmethacrylat/Maleinsäureanhydrid, Methylmethacrylat/Maleinsäureanhydrid/N-Phenylmaleimid, Acrylnitril/Styrol/ tert.-Butyl(meth)acrylat, Acrylnitril/Butadien/Styrol/ tert.-Butyl(meth)acrylat, Acrylnitril/Butylacrylat/Styrol/ tert.-Butyl(meth)acrylat, insbesondere sind Beispiele für Copolymere A-1: Styrol/Maleinsäureanhydrid, Styrol/Acrylnitril/Maleinsäureanhydrid, Styrol/Glycidylmethacrylat, Styrol/N-Phenylmaleimid, Styrol/Acrylnitril/N-Phenylmaleimid, Methylmethacrylat/N-Phenylmaleimid, Methylmethacrylat/Maleinsäureanhydrid/N-Phenylmaleimid.

Die Matrix-Komponente M enthält mindestens eine thermoplastische Formmasse A, insbesondere eine solche, die für die Herstellung von Faserverbund-Werkstoffen geeignet ist. Bevorzugt werden für die Formmasse A amorphe Thermoplaste eingesetzt. Beispielweise werden Styrolcopolymere eingesetzt, wie Styrol-Acrylnitril-Copolymere (SAN) oder α-Methylstyrol-Acrylnitril-Copolymere (AMSAN), schlagzäh modifizierte Styrol-Acrylnitril-Copolymere, wie Acrylnitril-Butadien-Styrol-Copolymere (ABS), Styrol-Methylmethacrylat-Copolymere (SMMA), Methacrylat-Acrylnitril-Butadien-Styrol-Copolymere (MABS) oder Acrylester-Styrol-Acrylnitril-Copolymere (ASA), wobei die Styrolcopolymere mit Monomere (A-I) modifiziert sind.

Auch Blends der zuvor genannten Copolymere mit Polycarbonat oder teilkristallinen Polymeren wie Polyamid, sind geeignet, vorausgesetzt, der Anteil teilkristalliner Mischkomponenten an der Komponente A ist kleiner als 50 Gew.%. Ganz besonders bevorzugt werden ABS Copolymere (mit Modifizierung durch Monomere A-I) als thermoplastische Formmasse A eingesetzt.

Es wird verstanden werden, dass hierbei mindestens eine der Polymer-Komponenten in der thermoplastische Formmasse A mit Monomer A-I modifiziert ist (Polymer-Komponente (A-a)), bevorzugt eine oder mehrere der vorstehend genannten Styrol-Copolymere mit Monomer A-I modifiziert ist. Beliebige weitere Polymer-Komponenten (etwa Styrol-Copolymere, bevorzugt solche wie vorstehend genannt) können optional zusätzlich in der thermoplastische Formmasse A enthalten sein, die optional nicht mit Monomer A-I modifiziert sind (Polymer-Komponente (A-b)) sind.

Auch Blends der zuvor genannten Copolymere (ein oder mehreren Polymer-Komponenten (A-a) und optional (A-b)) mit Polycarbonat oder teilkristallinen Polymeren wie Polyamid, sind geeignet, vorausgesetzt, der Anteil teilkristalliner Mischkomponenten an der Komponente A ist kleiner als 50 Gew.%. Ganz besonders bevorzugt werden SAN-(M-I)-Copolymere (mit Modifizierung durch Monomere A-I) als (optional auch als einziger polymerer Bestandteil) Bestandteil der thermoplastischen Formmasse A eingesetzt.

Ein erfindungsgemäß verwendetes, modifiziertes (α-Methyl)Styrol-Acrylnitril-Copolymer als thermoplastische Formmasse A wird hergestellt aus, bezogen auf das (a-Methyl)Styrol-Acrylnitril-Copolymer, 58 bis 85 Gew.-%, vorzugsweise 65 bis 80 Gew.-% (a-Methyl)Styrol, 14,7 bis 37 Gew.-%, vorzugsweise 19,7 bis 32 Gew.-% Acrylnitril und 0,3 bis 5 Gew.-%, vorzugsweise 0,3 bis 3 Gew.-% Maleinsäureanhydrid.

Besonders bevorzugt liegt der Gehalt an Maleinsäureanhydrid in der Komponente A bei 0,2 bis 2 Gew.-%, noch stärker bevorzugt bei 0,33 bis (etwa) 1 Gew.-%, insbesondere bei (etwa) 1 Gew.-% (daher 0,5 bis 1,49 Gew.%), wie aus den experimentellen Beispielen ersichtlich ist.

Auch Mischungen aus Styrol-Acrylnitril-Copolymer mit α-Methyl-Styrol-Acrylnitril-Copolymer sind zu nennen.

Ein erfindungsgemäßes Acrylnitril-Butadien-Styrol-Copolymer als thermoplastische Formmasse A wird nach bekannten Methoden hergestellt aus Styrol, Acrylnitril, Butadien und einem funktionellen weiteren Monomer A-I, wie z.B. Methylmethacrylat.

Das modifizierte ABS-Copolymer kann z. B. enthalten: bis zu 70 Gew.-% (etwa 35 bis 70 Gew.-%) Butadien, bis zu 99,9 Gew.-% (etwa 20 bis 50 Gew.-%) Styrol und bis zu 38 Gew.-% (etwa 9 bis 38 Gew.-%) Acrylnitril sowie 0,1 bis 20 Gew.-%, bevorzugt 0,1 bis 10, stärker bevorzugt 0,1 bis 5, insbesondere 0,1 bis 3 Gew.-% eines Monomers A-I, wie Maleinsäureanhydrid. Komponente A kann auch hergestellt werden aus 3bis zu 70 Gew.-% (etwa 35 bis 70 Gew.-%) mindestens eines konjugierten Diens, bis zu 99,9 Gew.-% (etwa 20 bis 50 Gew.-%) mindestens eines vinylaromatischen Monomers und bis 38 Gew.-% (etwa 9 bis 38 gew.-%) Acrylnitril sowie 0,1 bis 20 Gew.-%, bevorzugt 0,1 bis 10, stärker bevorzugt 0,1 bis 5, insbesondere 0,1 bis 3 Gew.-%, eines Monomers A-I, wie Maleinsäureanhydrid.

Gemäß einer stark bevorzugten Ausführungsform kann das modifizierte ABS-Copolymer (als Polymer-Komponente (A-a)) enthalten: 35 bis 70 Gew.-% Butadien, 20 bis 50 Gew.-% Styrol und 9,7 bis 38 Gew.-% Acrylnitril sowie 0,3 bis 5 Gew.-%, vorzugsweise 0,3 bis 3 Gew.-% eines Monomers A-I, wie Maleinsäureanhydrid. Komponente A kann auch hergestellt werden aus 35 bis 70 Gew.-% mindestens eines konjugierten Diens, 20 bis 50 Gew.-% mindestens eines vinylaromatischen Monomers und 9,7 bis 38 Gew.-% Acrylnitril sowie 0,3 bis 5 Gew.-%, vorzugsweise 0,3 bis 3 Gew.-% eines Monomers A-I, wie Maleinsäureanhydrid.

Ein erfindungsgemäßes (α-Methyl)Styrol-Methylmethacrylat-Copolymer (als Polymer-Komponente (A-a)) als thermoplastische Formmasse A wird hergestellt aus, bezogen auf das (α-Methyl)Styrol-Methylmethacrylat-Copolymer, mindestens 50 Gew.-%, vorzugsweise 55 bis 95 Gew.-%, besonders bevorzugt 60 bis 85 Gew.-% (a-Methyl)Styrol, 4,9 bis 45 Gew.-%, vorzugsweise 14,9 bis 40 Gew-% Methylmethacrylat und 0,1 bis 5 Gew.-%, vorzugsweise 0,1 bis 3 Gew.-% eines Monomers A-I, wie Maleinsäureanhydrid. Das (α-Methyl)Styrol-Methylmethacrylat-Copolymer kann statistisch oder als Blockpolymer aufgebaut sein. Komponente A kann auch hergestellt werden aus bezogen auf Komponente A, mindestens 50 Gew.-%, vorzugsweise 55 bis 95 Gew.-%, besonders bevorzugt 60 bis 85 Gew.-% vinylaromatisches Monomer, 4,9 bis 45 Gew.-%, vorzugsweise 14,9 bis 40 Gew-% Methylmethacrylat und 0,1 bis 5 Gew.-%, vorzugsweise 0,1 bis 3 Gew.-% eines Monomers A-I, wie Maleinsäureanhydrid.

In einer weiteren bevorzugten Ausführungsform, ist die erfindungsgemäße Komponenten A ein (jeweils optional zudem ein Monomer M-I enthaltenes) Styrol/Butadien Copolymer wie z.B. schlagfestes Polystyrol, ein Styrol-butadien-Blockcopolymer wie z.B. Styrolux®, Styroflex®, K-Resin, Clearen, Asaprene, ein Polycarbonat, ein amorpher Polyester oder ein amorphes Polyamid.

Der Fachmann wird verstehen, dass erfindungsgemäß mindestens eine der (Co)polymer-Komponenten der thermoplastischen Formmasse A ein (Co)polymer darstellt, das mindestens eine chemisch reaktive Funktionalität wie hierin beschrieben aufweist (Polymer-Komponente (A-a)). Dies kann auch eine Polymer-Komponente wie vorstehend beschrieben sein, die in der genannten Formmasse mindestens ein funktionales Monomer A-I enthält. Optional können ein oder mehrere beliebige weitere (Co)polymere ohne eine solche Funktionalität (als Polymer-Komponente (A-b)) eingesetzt werden.

In einer weiteren Ausführungsform kann die Matrix M aus mindestens zwei voneinander unterschiedlichen thermoplastischen Formmassen A bestehen. Diese verschiedenen Formmassetypen können beispielsweise einen unterschiedlichen Schmelzflussindex (MFI), und/oder andere Co-Monomere oder Additive aufweisen.

Gemäß der Erfindung kann der Begriff Molekulargewicht (Mw) im weitesten Sinne als die Masse eines Moleküls oder einen Bereich eines Moleküls (z.B. ein Polymerstrang, ein Blockpolymer oder ein kleines Molekül) verstanden werden, welches in g/mol (Da) und kg/mol (kDa) angegeben werden kann.
Vorzugsweise ist das Molekulargewicht (Mw) das Gewichtsmittel, welches über die im Stand der Technik bekannten Verfahren bestimmt werden kann.

Bevorzugt weisen die thermoplastischen Formmassen A ein Molekulargewicht Mw von 60.000 bis 400.000 g/mol, besonders bevorzugt von 80.000 bis 350.000 g/mol auf, wobei Mw durch Lichtstreuung in Tetrahydrofuran bestimmt werden kann (GPC mit UV-Detektor). Das Molekulargewicht Mw der thermoplastischen Formmassen A kann in einem Bereich von +/- 20% variieren.

Vorzugsweise enthält die thermoplastische Formmasse A ein durch eine chemisch reaktive Funktionalität modifiziertes Styrol-Copolymer, welches, bis auf den Zusatz der Monomere A-I, im Wesentlichen aus denselben Monomeren aufgebaut ist wie das "normale Styrol-Copolymer", wobei der Monomergehalt +/- 5%, das Molekulargewicht +/- 20% und der Schmelzflussindex (bestimmt bei einer Temperatur von 220 °C und einer Beladung von 10 kg nach dem ISO Verfahren 1133) +/- 20% abweichen. Unter ISO Verfahren 1133 wird bevorzugt DIN EN ISO 1133-1:2012-03 verstanden werden.

Gemäß einer bevorzugten Ausführungsform beträgt die Schmelzflussrate (Melt Volume Rate, MVR) der als Polymermatrix eingesetzten thermoplastische Polymerzusammensetzung A 10 bis 70 cm³/10min, bevorzugt 12 bis 70 cm³/10min, insbesondere 15 bis 55 cm³/10 min bei 220°C/10kg (gemessen nach IS01133).

Gemäß einer besonders bevorzugten Ausführungsform beträgt die Schmelzflussrate (Melt Volume Rate, MVR) der als Polymermatrix eingesetzten thermoplastische Polymerzusammensetzung A 10 bis 35 cm³/10min, bevorzugt 12 bis 30 cm³/10min, insbesondere 15 bis 25 cm³/10 min bei 220°C/10kg (gemessen nach ISO1133).

Alternativ kann die Schmelzflussrate (Melt Volume Rate, MVR) der als Polymermatrix eingesetzten thermoplastische Polymerzusammensetzung A 35 bis 70 cm³/10min, bevorzugt 40 bis 60 cm³/10min, insbesondere 45 bis 55 cm³/10 min bei 220°C/10kg (gemessen nach ISO1133), betragen.

Alternativ oder zusätzlich kann die mittels eines Kapillarviskosimeters ermittelte Viskositätszahl (J = (η/η₀-1) · 1/c) der als Polymermatrix eingesetzten thermoplastische Polymerzusammensetzung A, gemessen bei Raumtemperatut (20°C) für in Dimethylformamid gelöstes Granulat, 50 bis 100 ml/g betragen, bevorzugt 55 bis 85 ml/g. Gemäß einer bevorzugten Ausführungsform beträgt die Viskositätszahl 55 bis 75 ml/g, bevorzugt 60 bis 70 ml/g, insbesondere 61 bis 67 ml/g. Gemäß einer alternativen bevorzugten Ausführungsform beträgt die Viskositätszahl 60 bis 90 ml/g, bevorzugt 65 bis 85 ml/g, insbesondere 75 bis 85 ml/g.

Geeignete Herstellverfahren für Komponente A sind die Emulsions-, Lösungs-, Masse- oder Suspensionspolymerisation, bevorzugt ist die Lösungspolymerisation (siehe GB 1472195). In einer bevorzugten Ausführungsform der Erfindung wird die Komponente A nach der Herstellung nach dem Fachmann bekannten Verfahren isoliert und vorzugsweise zu Granulat verarbeitet. Danach kann die Herstellung der Faserverbund-Werkstoffe erfolgen.

### Komponente B

Der Faserverbund-Werkstoff (Organoblech) enthält mindestens 5 Gew.-%, bezogen auf den Faserverbund-Werkstoff, der Verstärkungsfaser B (Komponente B). Die Verstärkungsfaser B ist in dem Faserverbund-Werkstoff von 5 bis 70 Gew.-%, besonders bevorzugt von oftmals 10 bis 68 Gew.-%, ganz besonders bevorzugt von 20 bis 65 Gew.-%, oftmals von 24,9 bis 61,9 Gew.-% und insbesondere von 29 bis 61 Gew.-%, bezogen auf den Faserverbund-Werkstoff, enthalten.

Die Verstärkungsfaser B wird als Flächengebilde F eingesetzt. Die Verstärkungsfaser B kann jede Faser sein, deren Oberfläche funktionelle Gruppen B-I aufweist, die mit den Monomeren A-I der Komponente A eine kovalente Bindung eingehen können.

Erfindungsgemäß ist die Oberfläche von Verstärkungsfaser B mit einer Silan-Schlichte behandelt. Diese Schlichte dient beispielsweise beim Weben als Schmierstoff und könnte nach dem Weben chemisch entfernt werden.

Gemäß einer stärker bevorzugten Ausführungsform, sind die Verstärkungsfasern B Glasfasern, die Hydroxygruppen in Form von Silanolgruppen als chemisch reaktive Funktionalität B-I an der Oberfläche aufweisen.

Des Weiteren kann die Oberfläche der Verstärkungsfasern B weiter funktionelle Gruppen B-II wie Hydroxy-, Ester- oder Amino-Gruppen aufweisen.

Die Verstärkungsfasern B können als Flächengebilde F in beliebiger Orientierung und Anordnung in den Faserverbund-Werkstoff eingebettet sein.

Die Verstärkungsfasern B liegen in dem Faserverbund-Werkstoff nicht statistisch gleichverteilt vor, sondern als Flächengebilde, d.h. in Ebenen mit höherem und solchen mit niedrigerem Anteil (daher als mehr oder weniger separate Lagen). Vorzugsweise wird von einem laminatartigen oder laminaren Aufbau des Faserverbund-Werkstoffs ausgegangen.

Die Flächengebilde F der Verstärkungsfasern B liegen erfindungsgemäß als Gewebe, Matten, Vliese, Gelege oder Gewirke vor. Derartig gebildete flächige Laminate enthalten schichtweise aufgebaute Verbunde aus flächigen Verstärkungslagen (aus Verstärkungsfasern B) und Lagen der diese benetzenden und zusammenhaltenden Polymer-Matrix, enthaltend mindestens eine thermoplastischer Formmasse A. Gemäß einer bevorzugten Ausführungsform sind die Verstärkungsfasern B schichtweise in den Faserverbund-Werkstoff eingebettet. Bevorzugt liegen die Verstärkungsfasern B als Flächengebilde F vor.

In einem Gelege liegen die Fasern ideal parallel und gestreckt vor. Es werden zumeist Endlosfasern eingesetzt. Gewebe entstehen durch das Verweben von Endlosfasern, beispielsweise von Rovings. Das Verweben von Fasern geht zwangsläufig mit einer Ondulation der Fasern einher. Die Ondulation bewirkt insbesondere eine Absenkung der faserparallelen Druckfestigkeit. Matten bestehen meist aus Kurz- und Langfasern, die locker über ein Bindemittel miteinander verbunden werden. Durch den Einsatz von Kurz- und Langfasern sind die mechanischen Eigenschaften von Bauteilen aus Matten denen von Geweben unterlegen. Vliese sind Gebilde aus Fasern begrenzter Länge, Endlosfasern (Filamenten) oder geschnittenen Garnen jeglicher Art und jeglichen Ursprungs, die auf irgendeine Weise zu einem Vlies zusammengefügt und auf irgendeine Weise miteinander verbunden worden sind. Gewirke sind Fadensysteme durch Maschenbildung.

Das Flächengebilde F ist erfindungsgemäß ein Gelege, ein Gewebe, eine Matte, ein Vlies oder ein Gewirke. Besonders bevorzugt ist als Flächengebilde F ein Gelege oder ein Gewebe.

### Komponente C

Als weitere Komponente C enthält der eingesetzte Faserverbund-Werkstoff gegebenenfalls 0 bis 40 Gew.-%, vorzugsweise 0 bis 30 Gew.-%, besonders bevorzugt 0,1 bis 25 Gew.-%, oftmals von 1 bis 20 Gew.-%, bezogen auf die Summer der Komponenten A bis C, eines oder mehrerer, zu den Komponenten A und B unterschiedlicher Additive (Hilfs- und Zusatzstoffe).

Teilchenförmige mineralische Füllstoffe, Verarbeitungshilfsmittel, Stabilisatoren, Oxidations-Verzögerer, Mittel gegen Wärmezersetzung und Zersetzung durch ultraviolettes Licht, Gleit- und Entformungsmittel, Flammschutzmittel, Farbstoffe und Pigmente und Weichmacher sind zu nennen.

Auch Ester sind als niedermolekulare Verbindungen sind zu nennen. Gemäß der vorliegenden Erfindung können auch zwei oder mehr dieser Verbindungen verwendet werden. Im Allgemeinen liegen die Verbindungen mit einem Molgewicht kleiner 3000 g/mol, vorzugsweise kleiner 150 g/mol vor.

Teilchenförmige mineralische Füllstoffe können zum Beispiel durch amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin zur Verfügung gestellt werden.

Unter UV-Stabilisatoren fallen beispielsweise verschiedene substituierte Resorcine, Salicylate, Benzotriazole und Benzophenone, die im Allgemeinen in Mengen bis zu 2 Gew.-% eingesetzt werden können.

Erfindungsgemäß können der thermoplastischen Formmasse Oxidationsverzögerer und Wärmestabilisatoren zugesetzt werden. Sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, sind einsetzbar.

Ferner können gemäß der Erfindung Gleit- und Entformungsmittel, die in der Regel in Mengen bis zu 1 Gew.-% der thermoplastischen Masse zugesetzt werden. Zu nennen sind hier Stearinsäure, Stearylalkohol, Stearinsäurealkylester und -amide, vorzugsweise Irganox®, sowie Ester des Pentaerythrits mit langkettigen Fettsäuren. Es können die Calcium-, Zink- oder Aluminiumsalze der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden. Ferner könne natürliche sowie synthetische Wachse verwendet werden. Zu nennen sind PP-Wachse, PE-Wachse, PA-Wachse, gepfropfte PO-Wachse, HDPE-Wachsen, PTFE-Wachse, EBS-Wachse, Montanwachs, Carnauba- und Bienenwachse.

Flammschutzmittel können sowohl halogenhaltige als auch halogenfreie Verbindungen sein. Geeignete Halogenverbindungen, wobei bromierte Verbindungen den chlorierten vorzuziehen sind, bleiben bei der Herstellung und Verarbeitung der erfindungsgemäßen Formmasse stabil, so dass keine korrosiven Gase freigesetzt werden und die Wirksamkeit dadurch nicht beeinträchtigt wird. Bevorzugt werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet. Besonders bevorzugt enthalten Phosphorverbindungen Ester-, Alkyl-, Cycloalkyl- und/oder Aryl-Gruppen. Ebenfalls geeignet sind oligomere Phosphorverbindungen mit einem Molekulargewicht kleiner 2000 g/mol wie zum Beispiel in EP-A 0 363 608 beschrieben.

Ferner können Pigmente und Farbstoffe enthalten sein. Diese sind allgemein in Mengen von 0 bis 15, bevorzugt 0,1 bis 10 und insbesondere 0,5 bis 8 Gew.-%, bezogen auf die Summer der Komponenten A bis C, enthalten. Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO3.Pb(OH)2), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe3O4), Spinellschwarz (Cu(Cr,Fe)2O4), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung in den Thermoplasten erleichtert wird.

### Verfahren zur Herstellung der Faserverbund-Werkstoffe

Vorzugsweise werden Faserverbund-Werkstoffe (Organobleche) im Spritzgieß- oder Pressverfahren verarbeitet. Somit kann durch eine Funktionsintegration, z.B. das Anspritzen oder Anpressen von Funktionselementen, ein weiterer Kostenvorteil generiert werden, da auf weitere Montageschritte, z.B. das Anschweißen von Funktionselementen, verzichtet werden kann.

Das Verfahren zur Herstellung eines thermoplastischen Faserverbund-Werkstoffs enthaltend eine thermoplastischen Formmasse A als Polymer-Matrix M, Verstärkungsfasern B, sowie optional mindestens ein Additiv C, umfasst die Schritte:
i) Bereitstellen von Flächengebilden F aus, mit einer Silan-Schlichte behandelten Verstärkungsfasern B,
ii) Einbringen der Flächengebilde F in eine thermoplastische Formmasse A, welche mindestens 0,3 Mol-%, bezogen auf Komponente A, einer chemisch reaktiven Funktionalität aufweist,
iii) Reaktion von chemisch reaktiven Gruppen der thermoplastischen Formmasse A in der Polymer-Matrix M mit den polaren Gruppen an der Oberfläche der behandelten Verstärkungsfasern B unter Ausbildung kovalenter Bindungen,
iv) optionale Einarbeitung des mindestens einen Additivs C und Konsolidierung des Faserverbund-Werkstoffs,
v) Abkühlen und ggf. weitere Verfahrensschritte.

Das Herstellungsverfahren kann die bei der Herstellung von Verbundwerkstoffen üblichen Phasen der Imprägnierung, Konsolidierung und Solidifikation (Verfestigung) umfassen, wobei der Prozess über die Wahl der Temperatur, des Drucks und der angewandten Zeiten beeinflusst werden kann.

Gemäß einer bevorzugten Ausführungsform enthält (oder besteht aus) der Faserverbund-Werkstoff:
a) 30 bis 95 Gew.-% mindestens einer thermoplastischen Formmasse A,
b) 5 bis 70 Gew.-% mindestens einer Verstärkungsfaser B, und
c) 0 bis 40 Gew.-%, oftmals 0,1 bis 25 Gew.-%, mindestens eines Additivs C.

Die Schlichte ist eine Imprägnierflüssigkeit, welche auf die Verstärkungsfasern B etwa durch Sprühen oder Tauchen vor der Weiterverarbeitung, wie beispielsweise dem Weben, aufgebracht wird. Eine beschlichtete Faser ist geschmeidiger und widerstandsfähiger gegen mechanische Belastung. Ohne Beschlichtung kann ein Kettfaden durch die ständige Reibung am Schussfaden leicht brüchig werden und schließlich reißen.

Bei der Herstellung von Glasfasern werden diese beispielsweise mit hoher Geschwindigkeit aus der Schmelze gezogen. Die Dicke der Fasern wird hierbei durch die Größe der Düsen und die Abzugsgeschwindigkeit bestimmt. Die heißen Fasern werden durch Besprühen mit Wasser abgekühlt, über eine Tauchrolle mit Schlichte benetzt und die Einzelfilamente unmittelbar anschließend zu Rovings gebündelt. Die Schlichte hat mehrere Funktionen. Die Rovings werden durch die Schlichtebindemittel verklebt und erhalten damit ausreichende Stabilität gegen Abrieb beim Transport sowie gegen Ausreißen von einzelnen Fasern oder Bruch. Da die Schlichte gewöhnlich Wasser als Verdünnungsmittel enthält, müssen die Rovings getrocknet werden. Hierzu werden sie entweder nass aufgewickelt (zu sogenannten cakes) und dann getrocknet oder nass verarbeitet und später getrocknet. Die so erhaltenen Glasfasern können zur Verstärkung in thermoplastische Kunststoffe eingearbeitet werden. In der Regel liegt der Gewichtsanteil von Schlichte an der getrockneten Glasfaser zwischen 0,1 bis 10%.

Das Einbringen des mindestens einem Flächengebildes F in eine thermoplastische Matrix M von Schritt (ii) erfolgt vorzugsweise über Schmelzen der thermoplastischen Formmasse A und Inkontakt-Bringen dieser mit mindestens einem Flächengebilde F aus Verstärkungsfaser B aus Schritt (i).

Schritt (ii) des Verfahrens, das Schmelzen der thermoplastischen Formmasse A und das Inkontakt-Bringen dieser Schmelze mit den Verstärkungsfasern B, kann auf jede hierzu geeignete Weise erfolgen. Bei einer solchen Imprägnierung kann die Matrix M, bestehend aus mindestens einer thermoplastischen Formmasse A, in einen fließfähigen Zustand überführt werden und die Verstärkungsfasern B unter Ausbildung einer Grenzschicht benetzt werden.

Schritte (ii) und (iii) können auch gleichzeitig durchgeführt werden. Dann findet unmittelbar beim Inkontakt-Bringen der thermoplastischen Formmasse A mit den Verstärkungsfasern B eine chemische Reaktion statt, bei der die Monomere A-I mit der Oberfläche der Verstärkungsfasern B (in der Regel über eine Bindung an die funktionellen Gruppen B-I) eine kovalente Bindung ausbilden. Dies kann beispielhaft eine Veresterung sein (z.B. die Veresterung von Maleinsäureanhydrid-Monomeren mit Silanolgruppen einer Glasfaser). Alternativ kann die Ausbildung einer kovalenten Bindung auch in einem gesonderten Schritt initiiert werden (z.B. durch Temperaturerhöhung, Radikalstarter und/oder Photo-Initiation). Dies kann bei jeder geeigneten Temperatur durchgeführt werden.
Die Schritte (ii) und/oder (iii) werden bei einer Temperatur von mindestens 200°C, bevorzugt mindestens 250°C, stärker bevorzugt mindestens 300°C, insbesondere bei 300°C-340°C durchgeführt.

Hierbei ist bevorzugt darauf zu achten, dass möglichst keine Pyrolyse auftritt und die verwendeten Komponenten thermisch nicht zersetzt werden.

Gemäß einer bevorzugten Ausführungsform beträgt daher bei der Durchführung der Schritte (ii) und/oder (iii) die Verweildauer bei Temperaturen von ≥ 200°C nicht mehr als 10 min, bevorzugt nicht mehr als 5 min, stärker bevorzugt nicht mehr als 2 min, insbesondere nicht mehr als 1 min. Oftmals reichen 10 bis 60 Sekunden für die thermische Behandlung aus.

Das Verfahren, insbesondere die Schritte (ii) und (iii), kann grundsätzlich bei beliebigem Druck durchgeführt werden (bevorzugt atmosphärischer Druck (nicht erfindungsgemäß) oder, erfindungsgemäß, Überdruck), erfindungsgemäß mit Anpressen der Komponenten. Bei einem Anpressen mit Überdruck können die Eigenschaften des Faserverbund-Werkstoffs verbessert werden.

Gemäß einer bevorzugten Ausführungsform werden daher die Schritte (ii) und/oder (iii) bei einem Pressdruck von 5-100 bar und einer Presszeit von 10-60 s, bevorzugt bei einem Pressdruck von 10-30 bar und einer Presszeit von 15-40 s, durchgeführt.

Vorzugsweise werden mit mindestens einer chemisch reaktiven Funktionalität (A-I) versehene Styrol-Copolymere, also amorphe thermoplastische Matrices, als thermoplastische Formmasse A verwendet. Somit kann die Oberflächenqualität, für die nachfolgenden Anwendungen, im Vergleich zu den teilkristallinen Thermoplasten für derartige Verkleidungsteile wesentlich gesteigert werden, da durch die geringere Schwindung der amorphen Thermoplaste die Oberflächentopologie, aufgrund der faserreichen (Kreuzungspunkt bei Geweben) und faserarmen Regionen, wesentlich verbessert wird.

In Schritt (iv), bei der Konsolidierung, werden Lufteinschlüsse in dem Faserverbund-Werkstoff vermindert und eine gute Verbindung zwischen thermoplastischer Formmasse A und Verstärkungsfaser B (insbesondere, wenn es sich um schichtenweise eingebettete Verstärkungsfasern B handelt) hergestellt. Bevorzugt ist es, nach Imprägnierung und Konsolidierung einen (möglichst weitgehend) porenfreien Materialverbund zu erhalten. Auch Additive können optional in Schritt (iv) eingearbeitet werden.

Alternativ können die genannten Schritte in getrennter Abfolge ausgeführt werden. Beispielsweise können zunächst Lagen aus Verstärkungsfasern B mit unterschiedlich vorbereiteten Verstärkungsfasern B vorbereitet werden, wobei eine Imprägnierung der Verstärkungsfasern B mit der Matrix aus thermoplastischer Formmasse A stattfindet. Danach können imprägnierte Lagen mit Verstärkungsfasern B mit unterschiedlicher Faser-Matrix-Haftung vorliegen, die in einem weiteren Arbeitsschritt zu einem Materialverbund als Faserverbund-Werkstoff konsolidiert werden können.

Bevor die Lagen aus Verstärkungsfasern B mit der Matrix aus thermoplastischer Formmasse A laminiert werden, kann wenigstens ein Teil der Verstärkungsfasern B einer Vorbehandlung unterzogen werden, in deren Verlauf die spätere Faser-Matrix-Haftung beeinflusst wird. Die Vorbehandlung kann beispielsweise einen Beschichtungsschritt, einen Ätzschritt, einen Wärmebehandlungsschritt oder einen mechanischen Oberflächenbehandlungsschritt enthalten. Insbesondere kann beispielsweise durch Erhitzen eines Teils der Verstärkungsfasern B ein bereits aufgebrachter Haftvermittler teilweise entfernt werden.

Die Verstärkungslagen können beim Herstellungsprozess (Laminieren) vollständig miteinander verbunden werden. Derartige Faserverbund-Werkstoff-Matten bieten optimierte Festigkeit und Steifigkeit in der Faser-Richtung und können besonders vorteilhaft weiterverarbeitet werden.

Dass Verfahren kann auch die Herstellung eines Formteils T umfassen.

Gemäß einer bevorzugten Ausführungsform umfasst das Verfahren als weiteren Schritt (v) eine dreidimensionale Formgebung zu einem Formteil T.

Dies kann auf beliebige Art erfolgen, etwa durch mechanische Formgebung durch einen Formgebungskörper, der auch eine Walze mit Prägung sein kann. Bevorzugt wird der noch formbare Faserverbund-Werkstoff, bei dem die thermoplastische Formmasse A noch (teilweise) geschmolzen vorliegt geformt. Alternativ oder zusätzlich kann auch ein ausgehärteter Faserverbund-Werkstoff kaltgeformt werden.

Bevorzugt wird am Ende des Verfahrens ein (weitgehend) festes Formteil T erhalten.

Bevorzugt umfasst daher das Verfahren als weiteren Schritt (v) das Aushärten des Formteils T oder des aus Schritt (iv) erhaltenen Produkts. Dieser Schritt kann auch als Solidifikation bezeichnet werden. Die in der Regel unter Wärmeentzug stattfindende Solidifikation kann anschließend zu einem gebrauchsfertigen Formteil T führen.

Optional kann das Formteil T noch nachbearbeitet werden (z.B. entgratet, poliert, gefärbt usw.).

Das Verfahren kann kontinuierlich, semikontinuierlich oder diskontinuierlich erfolgen.

Gemäß einer bevorzugten Ausführungsform wird das Verfahren als kontinuierliches Verfahren durchgeführt, insbesondere als kontinuierliches Verfahren zu Herstellung von glatten oder dreidimensional geprägten Folien.

Alternativ könne auch Formteile T semi- oder diskontinuierlich hergestellt werden.

Die Organobleche besitzen eine amorphe, thermoplastische Matrix M. Diese können im Spritzgießverfahren mit einer Verrippung angebracht werden, auf einen geschäumten, thermoplastischen Kern oder auf einen Wabenkern als Deckschichten aufkaschiert (verschweißt) werden.

Die Verbesserung der Bauteilsteifigkeit durch eine Verrippung (Bildung einer gerippten Struktur) wird durch die Vergrößerung des Flächenträgheitsmomentes begründet. Generell beinhaltet die optimale Rippendimensionierung produktionstechnische, ästhetische und konstruktive Gesichtspunkte.

Gemäß einer besonders bevorzugten Ausführungsform betrifft die vorliegende Erfindung das erfindungsgemäße Verfahren zur Herstellung eines thermoplastischen Faserverbund-Werkstoffs, wobei Komponente A hergestellt wird aus
65 bis 80 Gew.-% (a-Methyl)Styrol,
19,9 bis 32 Gew.-% Acrylnitril und
0,1 bis 3 Gew.-% Maleinsäureanhydrid,
wobei das Flächengebildes F ein Gelege, ein Gewebe, eine Matte, ein Vliese oder ein Gewirke ist, und
wobei die Verweildauer zur Herstellung des Faserverbund-Werkstoffs bei Temperaturen von mindestens 200 °C bei maximal 10 Minuten liegt.

Gemäß einer besonders bevorzugten Ausführungsform betrifft die vorliegende Erfindung ein Verfahren zur Herstellung eines thermoplastischen Faserverbund-Werkstoffs enthaltend
a) 30 bis 95 Gew.-% der thermoplastischen Formmasse A als Polymer-Matrix, wobei Komponente A hergestellt wird aus 65 bis 80 Gew.-% (a-Methyl)Styrol, 19,7 bis 32 Gew.-% Acrylnitril und 0,3 bis 3 Gew.-% Maleinsäureanhydrid, und wobei das Flächengebilde F ein Gewebe, ein Gelege, eine Matte, ein Vlies oder ein Gewirke ist,
b) 5 bis 70 Gew.-% der Flächengebilde F aus Verstärkungsfasern B, wobei die Oberfläche der Verstärkungsfasern B eine oder mehrere der Funktionen aus der Gruppe Hydroxy-, Ester- und Amino-Gruppen enthält, und
c) 0 bis 40 Gew.-%, oftmals 0,1 bis 25 Gew.-% an Additiv C,
umfassend die Schritte:
i) Bereitstellen von Flächengebilden F aus, mit einer Silan-Schlichte behandelten Verstärkungsfasern B,
ii) Einbringen der Flächengebilde F in eine thermoplastische Formmasse A, welche mindestens 0,3 Mol-%, bezogen auf Komponente A, einer chemisch reaktiven Funktionalität aufweist, bei mindestens 200°C,
iii) Reaktion von chemisch reaktiven Gruppen der thermoplastischen Form-masse A in der Polymer-Matrix M mit den polaren Gruppen an der Oberfläche der behandelten Verstärkungsfasern B, wobei die Verweildauer bei Temperaturen von mindestens 200 °C bei maximal 10 Minuten liegt,
iv) optionale Einarbeitung des mindestens einen Additivs C und Konsolidierung des Faserverbund-Werkstoffs,
v) Abkühlen und ggf. weitere Verfahrensschritte,
wobei der Faserverbund-Werkstoff bevorzugt eine Verrippung oder einen Sandwichaufbau aufweist und/oder der Faserverbund-Werkstoff schichtartig aufgebaut ist und mehr als zwei Schichten enthält.

Noch stärker bevorzugt weist das Verfahren ein oder mehrere weitere Merkmale wie hierin beschrieben auf.

Die Verstärkungsfasern B können als Flächengebilde F aus Verstärkungsfasern B in einem einzigen Verarbeitungsschritt mit der Matrix M, enthaltend eine thermoplastische Formmasse A, imprägniert und konsolidiert werden. Die Herstellung des Faserverbund-Werkstoffs kann auf diese Weise in besonders effizienter Art erfolgen.

In einer weiteren Ausführungsform, ist vorgesehen, dass weitere Gruppen von Verstärkungsfasern B über weitere, abweichende Faser-Matrix-Haftungen mit der Matrix M gekoppelt sind.

Werden drei oder mehr Gruppen von Verstärkungsfasern B mit unterschiedlichen Faser-Matrix-Haftungen verwendet, kann das Verhalten des Faserverbund-Werkstoffs weiter gezielt und höchst individuell beeinflusst werden. Dabei können jeweils unterschiedliche Faserarten oder gleiche Faserarten verwendet werden.

Ebenfalls können Kett- und Schussfäden aus unterschiedlichen Verstärkungsfasern bestehen und/oder sich in der Dicke unterscheiden. Ferner können die Kett- und Schussfäden mit unterschiedlicher Schlichte oder verschiedenen Konzentrationen der Schichte behandelt worden sein.

Gruppen von Verstärkungsfasern B können jeweils mit verschiedenen Haftvermittler-Kompositionen versehen sein, welche die verschiedenen Faser-Matrix-Haftungen bewirken. Die unterschiedlichen Kompositionen können sich ausschließlich in den Konzentrationen unterscheiden oder auch andere Zusammensetzungen aufweisen. Wesentlich ist, dass durch die unterschiedlichen Haftvermittler-Kompositionen signifikant verschiedene Faser-Matrix-Haftungen eingestellt werden.

Bereits bei der Herstellung der Verstärkungsfasern B kann der Haftvermittler als Teil der Schlichte aufgebracht werden. Es kann jedoch auch ein zusätzlicher Vorgang des thermischen Entschlichtens oder sonstiger Entschlichtung vorgesehen sein, der die bereits aufgebrachte Schlichte zerstört oder entfernt. Anschließend kann dann die Verstärkungsfaser mit einem Finish beschichtet werden, die den Haftvermittler enthält und auf die jeweilige Matrix und die gewünschte Faser-Matrix-Haftung abgestimmt ist. Alternativ können auch Kunststoffschichten verwendet werden. Beispielsweise können bei dem erfindungsgemäßen Faserverbund-Werkstoff Haftvermittler verwendet werden, die vernetzungsfähige Polyetherurethan- und Polyesterurethan-Polymere enthalten, welche als Filmbildner wirken, zusammen mit einem Aminosilan-Haftvermittler.

Vorzugsweise sind gefinishte Verstärkungsfasern (beispielsweise Gewebe) mit modifizierten Silanschlichten (beispielsweise Finish FK 800) ausgerüstet. Sie sind sehr anschmiegsam und fransen beim Schneiden kaum aus.

Die Erfindung wird in den nachfolgenden Beispielen, Figuren und Ansprüchen näher beschrieben.

### Figuren

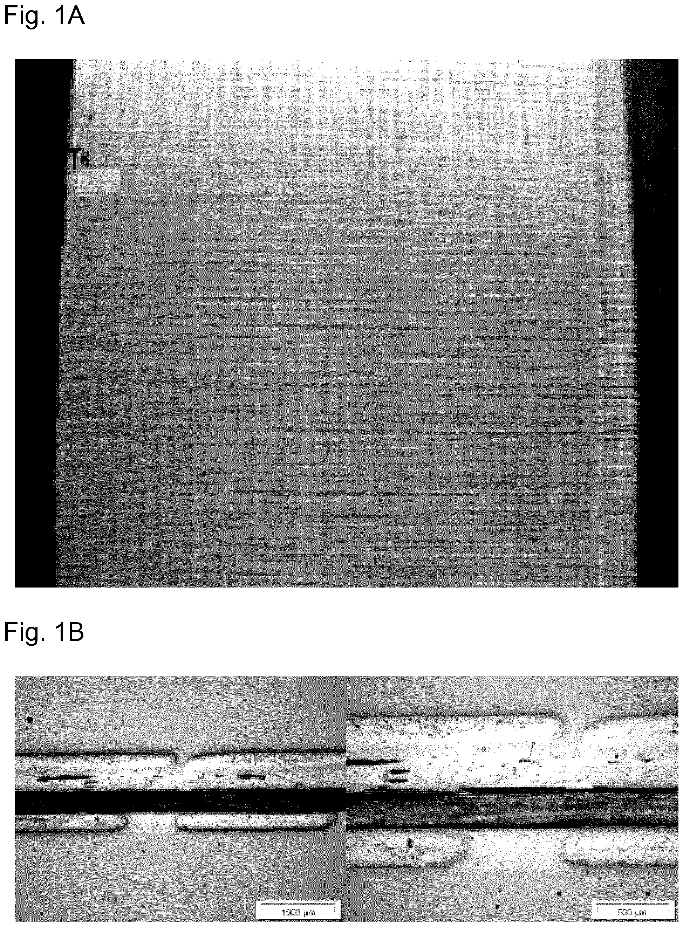

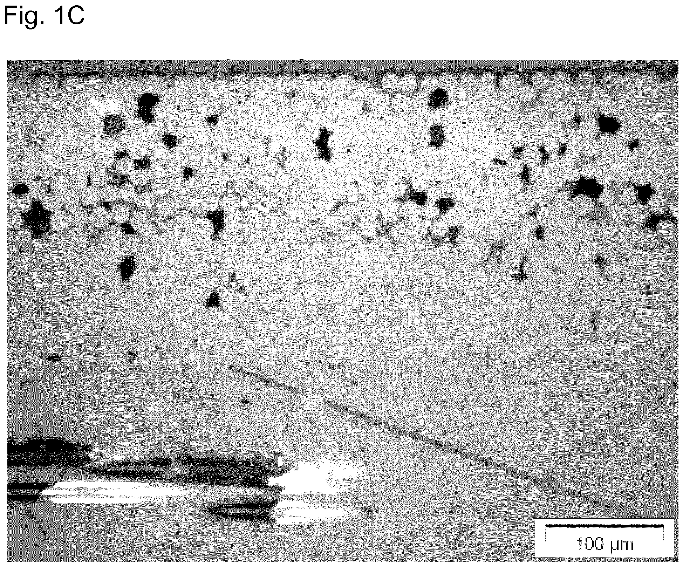

Figur 1 zeigt die Faserverbund-Werkstoffe W, die nach Versuchs-Nr. 1 erhalten wurden. Figur 1A stellt die visuelle Dokumentation dar. Figur 1B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei die Fasern deutlich als horizontal verlaufende dunkle Schicht zwischen den hellen Schichten aus thermoplastischer Formmasse erkennbar sind. Figur 1C zeigt die 200-fache Vergrößerung, wobei erkennbar wird, dass die Imprägnierung an einigen Stellen nicht abgeschlossen ist.

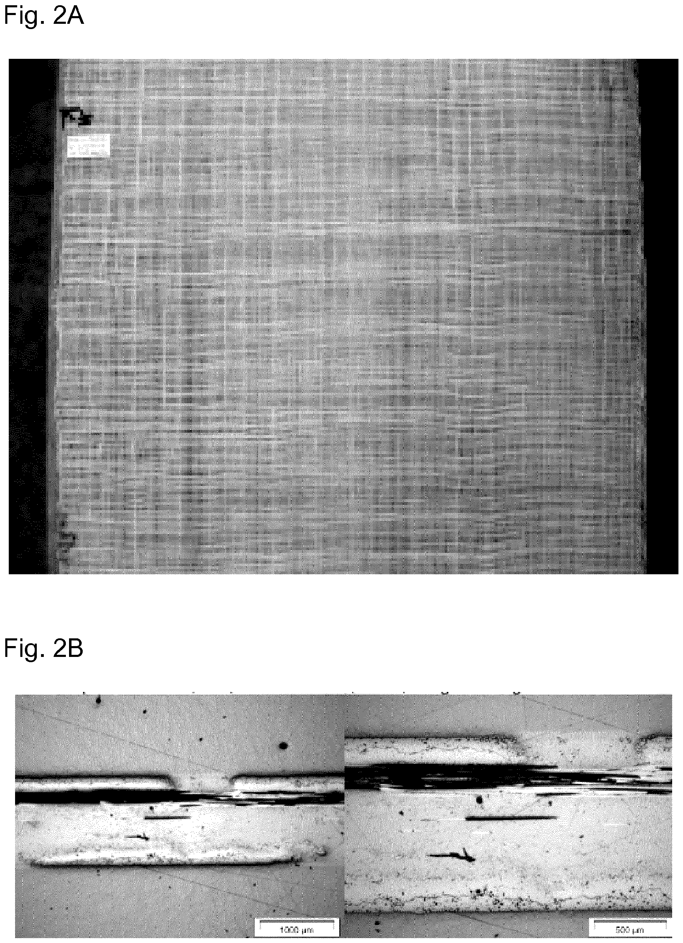

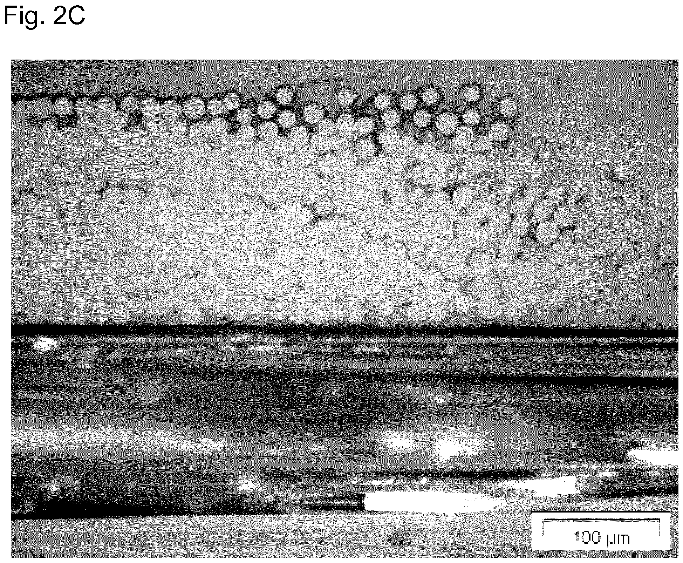

Figur 2 zeigt die Faserverbund-Werkstoffe W, die nach Versuchs-Nr. 2 erhalten wurden. Figur 2A stellt die visuelle Dokumentation dar. Figur 2B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei die Fasern deutlich als verlaufende dunkle Schicht zwischen den hellen Schichten aus thermoplastischer Formmasse erkennbar sind. Figur 2C zeigt die 200-fache Vergrößerung, wobei erkennbar wird, dass die Imprägnierung teilweise nicht abgeschlossen ist.

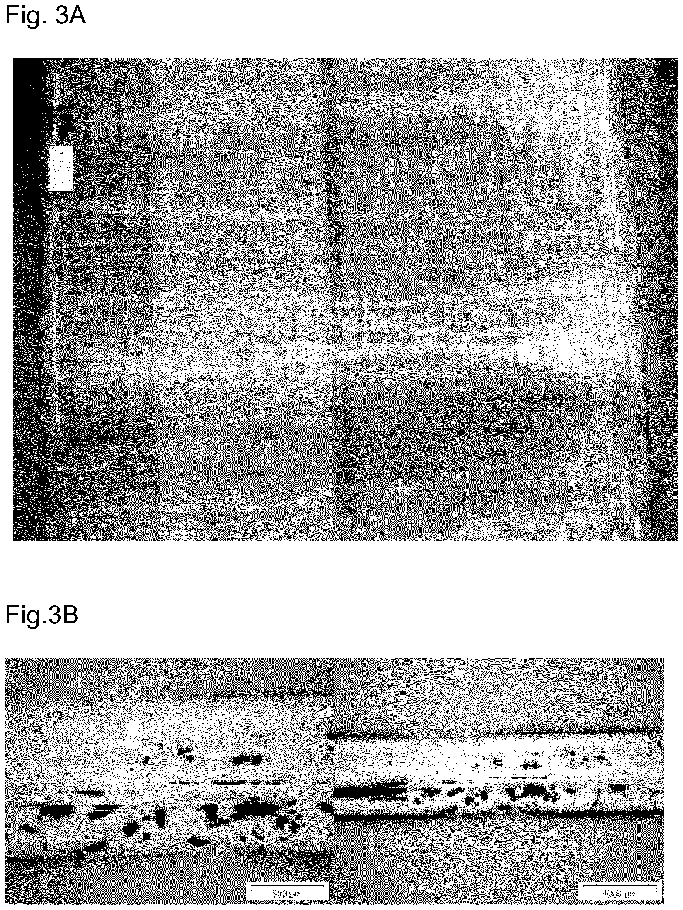

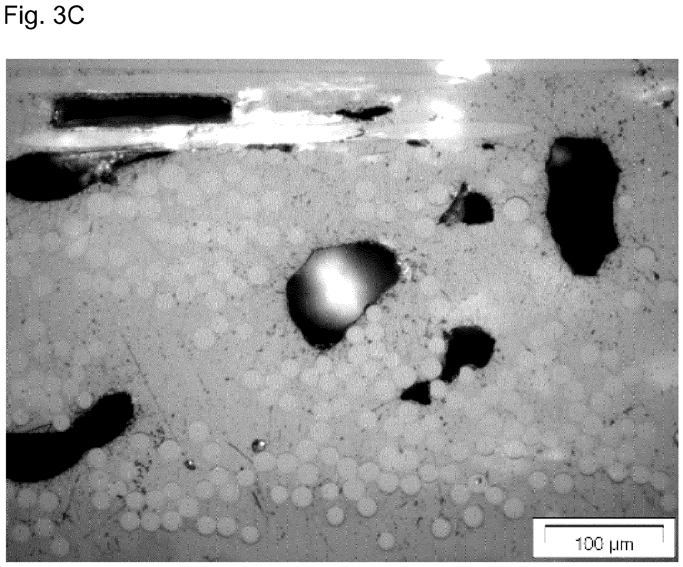

Figur 3 zeigt die Faserverbund-Werkstoffe W, die nach Versuchs-Nr. 3 erhalten wurden. Figur 3A stellt die visuelle Dokumentation dar. Figur 3B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 3C zeigt die 200-fache Vergrößerung, wobei erkennbar wird, dass die Imprägnierung weitgehend abgeschlossen ist.

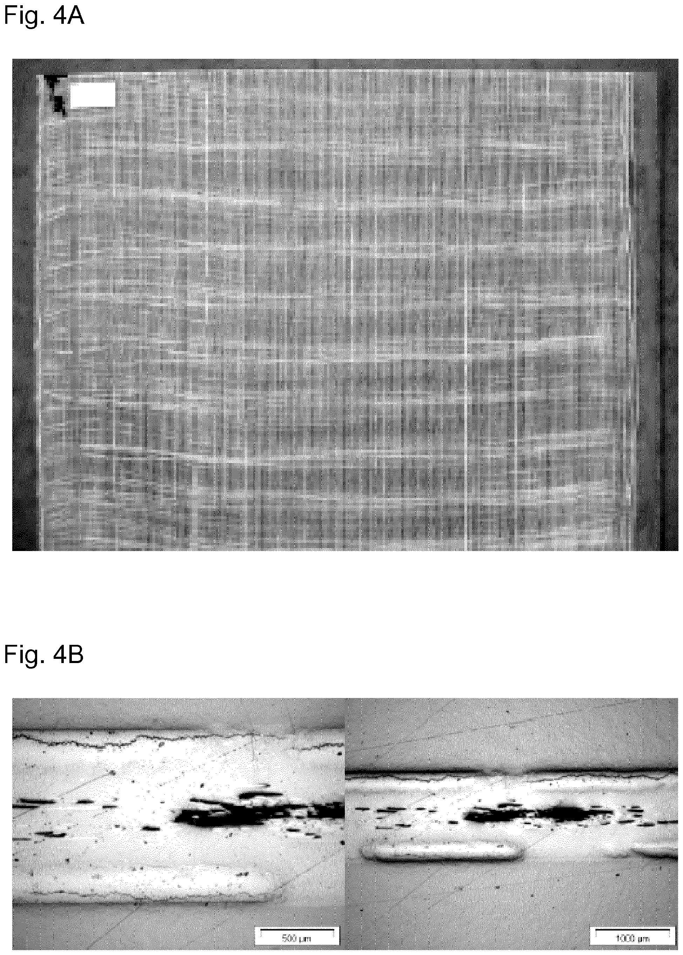

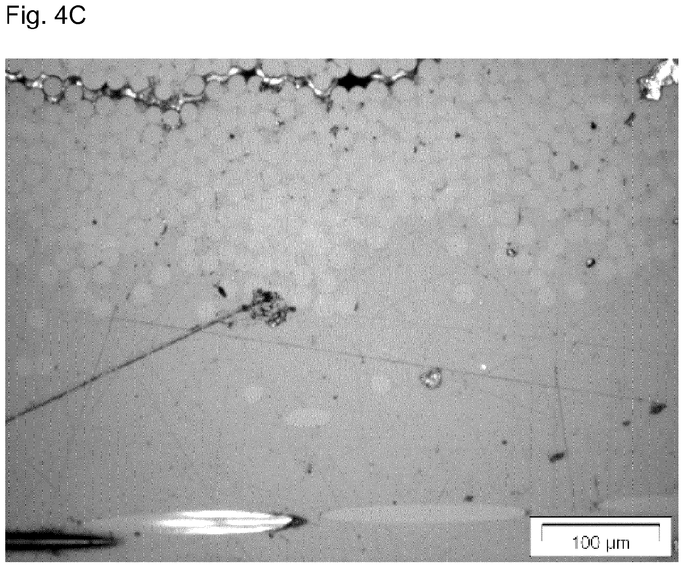

Figur 4 zeigt die Faserverbund-Werkstoffe W, die nach Versuchs-Nr. 4 erhalten wurden. Figur 4A stellt die visuelle Dokumentation dar. Figur 4B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 4C zeigt die 200-fache Vergrößerung, wobei erkennbar wird, dass die Imprägnierung an einzelnen Stellen nicht vollständig abgeschlossen ist.

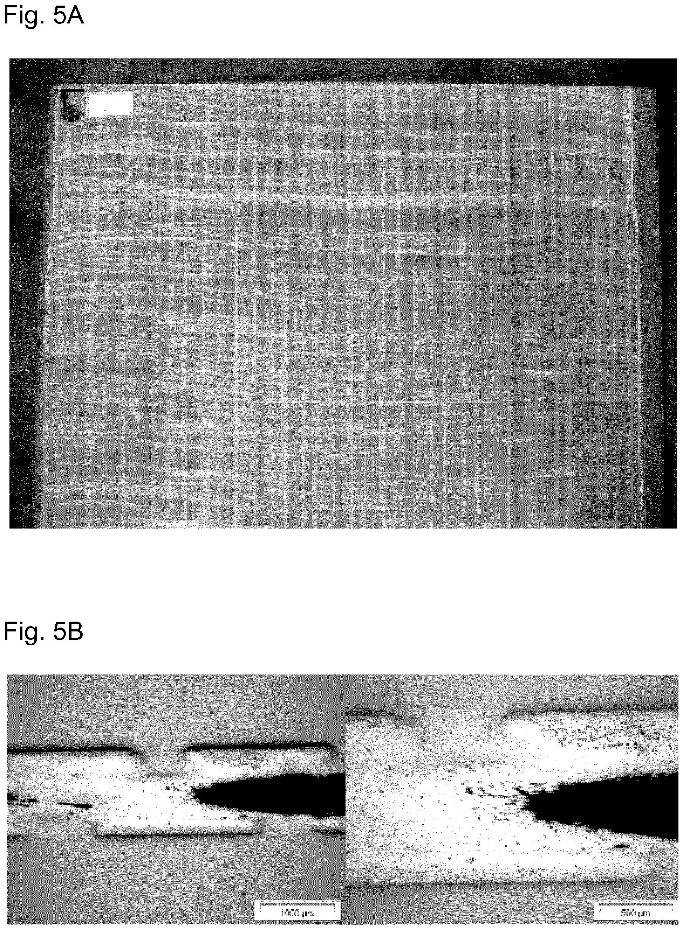

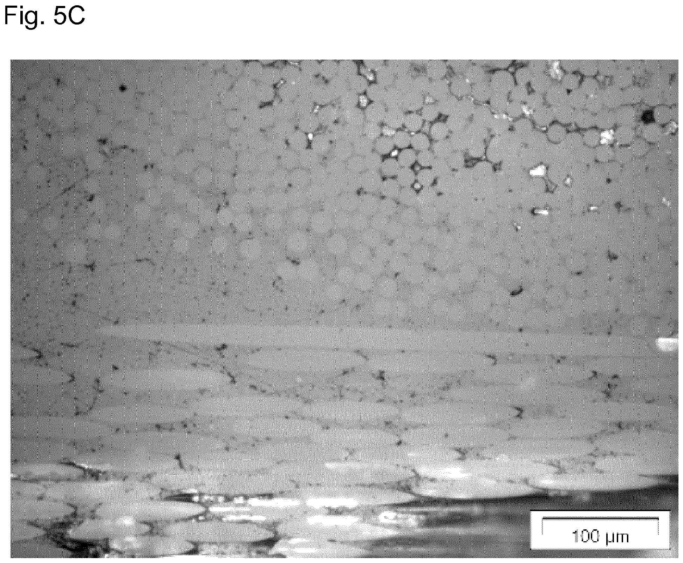

Figur 5 zeigt die Faserverbund-Werkstoffe W, die nach Versuchs-Nr. 5 erhalten wurden. Figur 5A stellt die visuelle Dokumentation dar. Figur 5B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 4C zeigt die 200-fache Vergrößerung, wobei erkennbar wird, dass die Imprägnierung an wenigen Stellen nicht vollständig abgeschlossen ist.

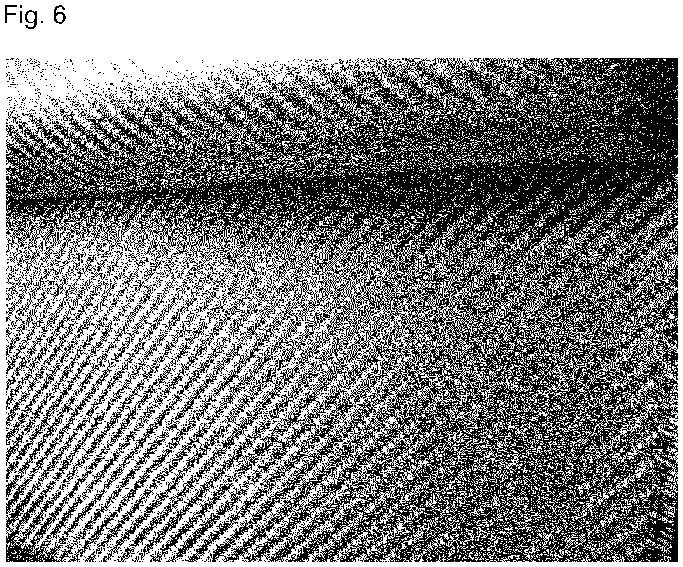

Figur 6 zeigt die Herstellung der Faserverbund-Werkstoffe W (hier: Glasfaser-Gewebe) im Presseneinlauf V25-V28. Deutlich erkennbar ist, dass ein derartiges Herstellungsverfahren eine kontinuierliche Produktion erlaubt. Zudem ist durch die Einprägung des Musters erkennbar, dass der Faserverbund-Werkstoff W auch dreidimensional formbar ist.

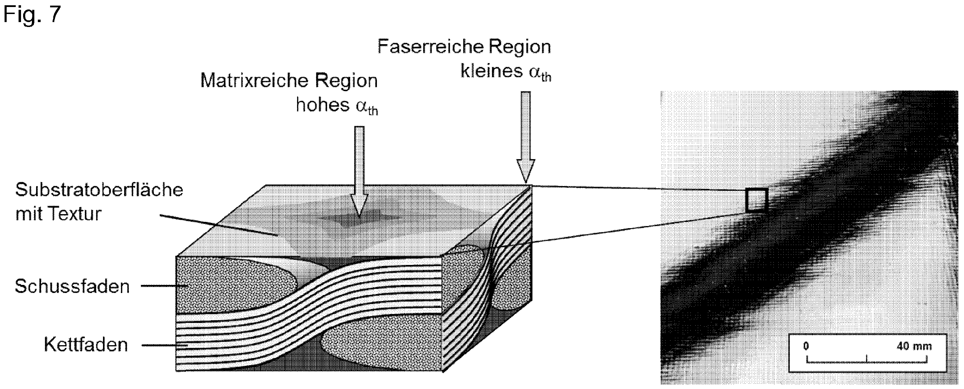

Figur 7 zeigt schematisch die Entstehung von unerwünschter Bildung von Oberflächenwellen (Textur).

### Beispiele

Die nachfolgenden Versuche wurden auf einer Intervall-Heißpresse, welche in der Lage ist einen Faser/Folienverbund aus Polymerfolie, Schmelze oder Pulver herzustellen, zur quasi-kontinuierlichen Herstellung von faserverstärkten thermoplastischen Halbzeugen, Laminaten und Sandwichplatten durchgeführt.
Plattenbreite: 660 mm
Laminat-Dicke: 0,2 bis 9,0 mm
Laminat-Toleranzen: max. ± 0,1 mm entsprechend Halbzeug
Sandwichplattenstärke: max. 30 mm
Ausstoß: ca. 0,1 - 60 m/h, abhängig von Qualität und Bauteildicke
Nennvorschub 5 m/h
Werkzeugdruck: Presseinheit 5-25 bar, für minimale und maximale Werkzeuggröße stufenlos regelbar (optional)
Werkzeugtemperierung: 3 Heiz- und 2 Kühlzonen
Werkzeugtemperatur: bis 400 °C
Werkzeuglänge: 1000 mm
Öffnungsweg Presse: 0,5 bis 200 mm

### Technische Daten der Schmelze-Plastifizierung sind:

Diskontinuierlicher Schmelzeauftrag in Mittellage zur Herstellung von faserverstärkten thermoplastischen Halbzeugen
Schneckendurchmesser: 35mm
Max. Hubvolumen: 192 cm³
Max. Schneckendrehzahl: 350 U/min
Max. Austragsstrom: 108 cm³/s
Max. Austragsdruck: 2406 bar spezifisch

Die Biegespannung und das Biegemodul wurden nach DIN 14125:2011-05 bestimmt.

### Komponenten:

A1: Styrol-Acrylnitril (S/AN) Copolymer mit der Zusammensetzung 75 Gew.-% Styrol (S) und 25 Gew.-% Acrylnitril (AN), Viskositätszahl 60, Mw von 250.000 g/mol (gemessen via Gel Permeations Chromatographie an Standard Säulen mit monodispersen Polystyrol Eichstandards)
A2: S/AN/Maleinsäureanhydrid (MSA) Copolymer mit der Zusammensetzung (Gew.-%): 74/25/1; Konzentration an funktionellen Gruppen: 1 Gew.-% MSA (98.1 g/mol) in 74 Gew.-% Styrol (104.2 g/mol) und 25 Gew.-% AN (53.1 g/mol), Mw 250.000 g/mol (gemessen via Gel Permeations Chromatographie an Standard Säulen mit monodispersen Polystyrol Eichstandards)
A3: Mischung aus A2 : A1 = 2 : 1, Konzentration an funktionellen Gruppen: 0,67 Gew.-% MSA
A4. Mischung aus A2 : A1 = 1 : 2, Konzentration an funktionellen Gruppen: 0,33 Gew.-% MSA
B1: Bidirektionales Glasfasergelege 0/90° mit Flächengewicht = ca. 590 g/m², Schuss + Kette = 1200tex (=1200 g/1000m) [beispielsweise KN G 590.1 von P-D Glasseiden GmbH]
B2: Glasfaser-Köpergewebe 2/2 mit Flächengewicht = ca. 576 g/m², Schuss + Kette = 1200tex [beispielsweise GW 123-580K2 von P-D Glasseiden GmbH]

Die Kombinationen und Parametereinstellungen zu dem in Anspruch 1 beschriebenen Verfahren sind in nachfolgender Tabelle aufgeführt:

**Tabelle 1: Zusammensetzungen Vgl. 1, Vgl. 2, Vgl. 10 und Vgl. 15 sowie der erfindungsgemäßen Zusammensetzungen V3 bis V9 und V11 bis V14. X: Gewichtsverhältnis Komponente A : B = 60 : 40**

| Nr. | A1 | A2 | A3 | A4 | B1 | B2 | T[°C] | t [s] |
|---|---|---|---|---|---|---|---|---|
| Vgl. 1 | X | | | | X | | 260 | 20-30 |
| Vgl. 2 | X | | | | X | | 300 | 30-30 |
| V3 | | X | | | X | | 280 | 20-30 |
| V4 | | X | | | X | | 280 | 40 |
| V5 | | X | | | X | | 320 | 30-30 |
| V6 | | | X | | X | | 300 | 20-30 |
| V7 | | | X | | X | | 320 | 20-30 |
| V8 | | | | X | X | | 310 | 20-30 |
| V9 | | | | X | X | | 320 | 20-30 |
| Vgl. 10 | X | | | | X | | 320 | 20-30 |
| V11 | | X | | | X | | 320 | 20-30 |
| V12 | | X | | | | X | 320 | 20-30 |
| V13 | | | X | | | X | 320 | 20-30 |
| V14 | | | | X | | X | 320 | 20-30 |
| Vgl. 15 | X | | | | | X | 320 | 20-30 |

In Tabelle 1 werden die Bedingungen der durchgeführten Versuche dargestellt. Hierbei wurden die Edukte, sowie die Temperatur und die Presszeit variiert. Der Pressdruck betrug in allen Versuchsreihen ca. 20 bar.

Tabelle 2: Mittelwerte der maximalen Biegespannung der Kett- und Schussrichtung der hergestellten Organobleche gemäß den Mischungen Vgl. 2, V5, V7, V9, Vgl. 10, V12 bis V14 und Vgl. 15, wobei die Herstellungstemperatur je mindestens 300 °C betrug.

| Nr. | Faserrichtung | Mittelwerte der maximale Biegespannung [MPa] |
|---|---|---|
| Vgl. 2 | Kettrichtung | 211,23 |
| | Schuss richtung | 184,94 |
| V5 | Kettrichtung | 670,48 |
| | Schuss richtung | 271,05 |
| V7 | Kettrichtung | 590,98 |
| | Schuss richtung | 301,21 |
| V9 | Kettrichtung | 371,73 |
| | Schuss richtung | 244,62 |
| Vgl. 10 | Kettrichtung | 319,8 |
| | Schuss richtung | 236,01 |
| V12 | Kettrichtung | 556,15 |
| | Schuss richtung | 484,24 |
| V13 | Kettrichtung | 528,96 |
| | Schuss richtung | 386,83 |
| V14 | Kettrichtung | 513,95 |
| | Schuss richtung | 413,86 |
| Vgl. 15 | Kettrichtung | 423,03 |
| | Schuss richtung | 301,40 |

Die in Tabelle 2 dargestellten Werte sind das Mittel von je neun Messungen. Tabelle 2 zeigt, dass die erfindungsgemäßen Organobleche V5, V7, V9, V12, V13 und V14 eine höhere mittlere maximale Biegespannung aufweisen als die Organobleche, welche eine Matrix enthaltend 75 Gew.-% Styrol (S) und 25 Gew.-% Acrylnitril (AN), aufweist (Vgl. 10 und Vgl. 15). Auch der Vergleich von V9 mit Vgl. 10 zeigt, dass unter den gleichen Bedingungen (T=320 °C und t=30 s) das erfindungsgemäße Organoblech eine größere Biegespannung sowohl in der Kett- als auch in der Schussrichtung aufweist.

Es zeigt sich, dass durch das Verfahren zur Herstellung des Faserverbund-Werkstoffs mit einer thermoplastischen Formmasse A, Verstärkungsfasern B verbesserte Produkte erhalten werden können.

### Weitere Untersuchung von Mehrschichtigen Faserverbund-Werkstoffen

### Technische Daten der Intervall-Heißpresse (IVHP):

Quasi-kontinuierliche Herstellung von faserverstärkten thermoplastischen Halbzeugen, Laminaten
und Sandwichplatten
Plattenbreite: 660 mm
Laminat-Dicke: 0,2 bis 9,0 mm
Laminat-Toleranzen: max. ± 0,1 mm entsprechend Halbzeug
Sandwichplattenstärke: max. 30 mm
Ausstoß: ca. 0,1 - 60 m/h, abhängig von Qualität und Bauteildicke Nennvorschub 5 m/h
Werkzeugdruck: Presseinheit 5-25 bar, für minimale und maximale Werkzeuggröße stufenlos regelbar (optional)
Werkzeugtemperierung: 3 Heiz- und 2 Kühlzonen
Werkzeugtemperatur: bis 400 °C
Werkzeuglänge: 1000 mm
Öffnungsweg Presse: 0,5 bis 200 mm
Produktionsrichtung: rechts nach links

### Technische Daten der Schmelze-Plastifizierung:

Diskontinuierlicher Schmelzeauftrag in Mittellage zur Herstellung von faserverstärkten thermoplastischen
Halbzeugen
Schneckendurchmesser: 35mm
Max. Hubvolumen: 192 cm³
Max. Schneckendrehzahl: 350 U/min
Max. Austragsstrom: 108 cm³/s
Max. Austragsdruck: 2406 bar spezifisch
hierbei:
Schmelzevolumne: 22 ccm
   isobar = druckgesteuerter Pressprozess
   isochor = volumengesteuerter Pressprozess
   T [°C] = Temperatur der Temperaturzonen* (*Die Presse verfügt über 3 Heiz- und 2 Kühlzonen. Die Angabe bezieht in Produktionsrichtung)
   p [bar] = Pressdruck pro Zyklus: Isochor 20
   s [mm] = Wegbegrenzung Pressdicke: 1.1 mm
Temperaturprofil:
   (i) 210 bis 245°C, daher ca. 220°C
   (ii) 300 bis 325°C, daher ca. 300°C
   (iii) 270 bis 320°C, daher ca. 280 bis 320°C
   (iv) 160 bis 180°C
   (v) 80°C
   t [sec] = Presszeit pro Zyklus: 20-30 s
Aufbau/Laminierung: 6-lagiger Aufbau mit Schmelze-Mittelschicht; Herstellungsverfahren: Schmelze-Direkt (SD)

### Matrix-Komponenten A:

M1 (SAN Typ): Styrol-Acrylnitril-Maleinsäureanhydrid- (SAN-MA-) Terpolymer (S/AN/MA: 74/25/1) mit einem MA-Anteil von 1 Gew.-% und einem MVR von 22 cm³/10 min bei 220°C/10kg (gemessen nach ISO1133);
M1b entspricht der vorgenannten Komponente M1, wobei der Matrix zusätzlich 2 Gew.-% Industrieruß beigemischt wurden.
M2 (SAN Typ): Styrol-Acrylnitril-Maleinsäureanhydrid- (SAN-MA-) Terpolymer (S/AN/MA: 73/25/2,1) mit einem MA-Anteil von 2,1 Gew.-% und einem MVR von 22 cm³/10 min bei 220°C/10kg (gemessen nach ISO1133);
M2b entspricht der vorgenannten Komponente M2, wobei der Matrix zusätzlich 2 Gew.-% Industrieruß beigemischt wurden.
M3 (SAN Typ): Blend aus 33 Gew.-% M1 und 67 Gew.-% des SAN-Copolymers Luran VLN, daher 0,33 Gew.-% MaleinsäureanhydridMA) im gesamten Blend;
M3b entspricht der vorgenannten Komponente M3, wobei der Matrix zusätzlich 2 Gew.-% Industrieruß beigemischt wurden.

| | |
|---|---|
| PA6: | teilkristallines, leichtfließendes Polyamid Durethan B30S |
| PD(OD): | leichtfließendes, amorphes Polycarbonat optischer Grade für optische Discs); |

### Faser-Komponenten B:

Glasfilament-Köpergewebe (Kurzbezeichnungen: GF-KG(LR) bzw. LR), Köperbindung 2/2, Flächengewicht 290 g/m², Roving EC9 68tex, Finish TF-970, Lieferbreite 1000 mm (Typ: 01102 0800-1240; Hersteller: Hexcel, erhalten von: Lange + Ritter)
Glasfilament-Köpergewebe (Kurzbezeichnungen: GF-KG(PD) bzw. PD), Köperbindung 2/2, Flächengewicht 320 g/m², Roving 320tex, Finish 350, Lieferbreite 635 mm (Typ: EC14-320-350, Hersteller und Lieferant: PD Glasseide GmbH Oschatz)
Glasfilament-Gelege (Kurzbezeichnung: GF-GE(Sae) bzw. Sae) 0°/45°/90°/-45°, Flächengewicht 313 g/m², Haupt-Roving 300tex, Finish PA-Schlichte, Lieferbreite 655mm (Typ: X-E-PA-313-655, Nr. 7004344, Hersteller und Lieferant: Saertex GmbH&Co. KG)
Sae n.s. = Glasfilament-Gelege 300 g/m², Herstellerbezeichnung: Saertex new sizing, +45°/-45°/+45°/-45°
Glasfaservlies (Kurzbezeichnung: GV50), Flächengewicht 50 g/m², Faserdurchmesser 10 µm, Lieferbreite 640 mm (Typ: Evalith S5030, Hersteller und Lieferant: Johns Manville Europe)

### Visuelle Bewertung

Alle hergestellten Faserverbund-Werkstoffe ließen sich jeweils als (groß)flächige Organobleche in einem Endlosverfahren herstellen, die problemlos (in kaschierbare, transportübliche Maße wie etwa 1 m x 0,6 m) die zuschneidbar waren. Bei den transparenten Faserverbund-Werkstoffen war das eingebettete Fasermaterial bei detaillierter Betrachtung im Gegenlicht gerade erkennbar. Bei den Faserverbund-Werkstoffen mit (schwarz) eingefärbter Matrix war das eingebettete Fasermaterial auch bei näherer optischer Betrachtung im Gegenlicht nicht/kaum erkennbar.

### Mikroskopische Bewertung

Hierbei wurden Fehlstellen (Lunker, Einfall, etc.) über Auflichtmikroskopie und die Oberflächengüte über konfokale Laser-Scannning-Mikroskopie (LSM) bewertet. Mittels LSM wurde eine Aufsicht einer drei-dimensionalen (3D-)Höhenaufnahme (7,2 mm x 7,2 mm) des lokalen Messbereichs und eine zweidimensionalen (2D-)Darstellung der Höhenunterschiede nach Skalierung und Anwendung verschiedener Profilfilter erstellt. Messfehler und einen generellen Verzug/Schieflage der Probe wurden durch den Einsatz von Profilfiltern (Rauschfilter und Verkippungsfilter) ausgeglichen. Das 2D-Höhenprofil der Aufnahme wurde über definierte Messlinien durch integrierte Software in Linienprofile übertragen und computer-gestützt ausgewertet.

Es wurden Faserverbund-Werkstoffe mit jeweils vier in die jeweilige Matrix eingebetteten Lagen des entsprechenden Flächengebildes an Fasern (hier GF-KG(PD)(4) bzw. Sae(4)) hergestellt. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hatte keinen merklichen Einfluss auf die mechanischen Eigenschaften.

Die Mittlere Wellentiefe (MW Wt) und der Raumittenwert (Ra) wurden für zahlreiche Faserverbund-Werkstoffe ermittelt. Es zeigte sich, dass die MW Wt für alle Faserverbund-Werkstoffe, bei denen die Matrix eine funktionale Komponente enthält, die mit den Fasern reagieren kann, deutlich < 10 µm ist, wohingegen sie bei Faserverbund-Werkstoffen mit vergleichbaren PA6- und PD(OD)-Matrices deutlich <10 µm ist. Auch die ermittelten Raumittenwerte waren deutlich niedriger für erfindungsgemäße Faserverbund-Werkstoffe. Beispielhaft zeigen dies die untenstehenden, gemessenen Werte.

**Tabelle 3. Messergebnisse der LSM-Vermessung mit SAN-Matrixsystem - Wellentiefe (Wt) und Raumittenwert (Ra)**

| | SAN(1) | | | | PC(1) | PA6(1) |
|---|---|---|---|---|---|---|
| Aufbau | +GF-KG(PD)(4) | | | | | |
| Komponenten | M1b+PD | M2+PD | M2b+PD | M3b+PD | PC(OD)+ PD | PA6+ PD |
| MW Wt | 7,141 | 7,187 | 5,181 | 5,425 | 11,745 | 12,323 |
| MW Ra | 3,995 | 4,415 | 4,17 | 3,451 | 6,406 | 4,968 |

Ebenso deutlich wurde dies, wenn anstelle des Gewebes ein Gelege (wie Sae) eingesetzt wird:

**Tabelle 4. Messergebnisse der LSM-Vermessung mit SAN-Matrixsystem - Wellentiefe (Wt) und Raumittenwert (Ra)**

| Aufbau | SAN(1) | | PA6(1) |
|---|---|---|---|
| Aufbau | +Sae(4) | | |
| Komponenten | M 1 b+Sae | M2b+Sae | |
| MW Wt | 5,535 | 5,205 | 17,05 |
| MW Ra | 4,261 | 4,24 | 4,861 |

In weiteren Versuchen wurde die Festigkeit in Kett- und in Schussrichtung gesondert untersucht. Es konnte gezeigt werden, dass die Faserverbund-Werkstoffe sowohl in Kett- wie auch in Schussrichtung sehr stabil sind. In Kettrichtung sind die faserverbund-Werkstoffe in der Regel noch stabiler als in Schussrichtung.

### Mechanische Eigenschaften

### Matrix-Komponenten A

Die Matrix-Komponenten A sind wie oben beschrieben.

### Faser-Komponenten B (sofern nicht oben beschrieben)

FG290 = Glasfilament-Gewebe 290g/m², Herstellerbezeichnung: Hexcel HexForce® 01202 1000 TF970
FG320 = Glasfilament-Gewebe 320g/m², Herstellerbezeichnung: PD Glasseide GmbH Oschatz EC 14-320-350
Sae = MuAx313, Glasfilament-Gelege 300g/m², Herstellerbezeichnung: Saertex X-E-PA-313-655
Sae n.s. = Glasfilament-Gelege 300g/m², Herstellerbezeichnung: Saertex new sizing, +45°/-45°/+45°/-45°
Anzahl an Schichten (z.B. 4x = vier Schichten des jeweiligen Fasergeleges bzw. der jeweiligen Fasern)

Hergestellt wurden folgende transparente Faserverbund-Werkstoffe, in die jeweils flächiges Fasermaterial eingebracht wurde. Die hergestellten Faserverbund-Werkstoffe wiesen jeweils eine Dicke von etwa 1,1 mm auf. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hat keinen merklichen Einfluss auf die mechanischen oder optischen Eigenschaften. Für die Proben wurden folgende Biegefestigkeiten nach DIN EN ISO 14125 ermittelt:

**Tabelle 5. Transparente Faserverbund-Werkstoffe - Biegefestigkeit**

| Nr. | Aufbau | Glasanteil [g/m²] | Matrix | Dicke [mm] | E-Modul | Biegefestigkeit |
|---|---|---|---|---|---|---|
| F/T_1 | 4xFG290 | 1260 | M2 | 1,09 | 18,41 | 658,89 |
| F/T_2 | 4xFG320 | 1380 | M2 | 1,09 | 18,17 | 634,32 |
| F/T_3 | 4xSae | 1352 | M2 | 1,16 | 18,44 | 444,33 |
| F/T_4 | Sae n.s. | | M2 | 1,17 | 15,93 | 621,04 |
| F/T_5 | 4xFG320 | 1380 | PC(OD) | 1,14 | 23,36 | 377,97 |

Hergestellt wurden zudem folgende schwarz eingefärbte Faserverbund-Werkstoffe, bei denen der Matrix 2 Gew.-% Industrieruß beigemischt und in die jeweils flächiges Fasermaterial eingebracht wurde. Die hergestellten Faserverbund-Werkstoffe wiesen jeweils eine Dicke von etwa 1,1 mm auf. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hat keinen merklichen Einfluss auf die mechanischen oder optischen Eigenschaften. Für die Proben wurden folgende Biegefestigkeiten nach DIN EN ISO 14125 ermittelt:

**Tabelle 6. Intransparente Faserverbund-Werkstoffe - Biegefestigkeit**

| Nr. | Aufbau | Glasanteil [g/m²] | Matrix | Dicke [mm] | E-Modul | Biegefestigkeit |
|---|---|---|---|---|---|---|
| F/S_1 | 4xFG290 | 1260 | M2 | 1,07 | 21,61 | 661,73 |
| F/S_2 | 4xFG320 | 1380 | M2 | 1,20 | 22,70 | 673,99 |
| F/S_3 | 4xSae | 1352 | M2 | 1,15 | 14,92 | 385,21 |
| F/S_4 | 4xSae | 1352 | PA6 | 1,13 | 14,30 | 477,77 |
| F/S_5 | 4xFG320 | 1380 | PA6 | 1,11 | 16,95 | 471,97 |

Zusammenfassend zeigte sich, dass die eingesetzten Gewebe (FG290 und FG320) zu Faserverbund-Werkstoffen mit besonders hoher Biegefestigkeit verarbeitet werden können. Die erfindungsgemäßen Faserverbund-Werkstoffe, bei denen die Matrix eine mit den Fasern reagierende Komponenten (hier: Maleinsäureanhydrid (MA)) enthält, weisen eine signifikant höhere Biegefestigkeit auf als die Vergleichsformmassen ohne eine solche Komponente, wie etwa PC(OD) oder PA6.

Im Vergleich dazu wurde für den nicht-erfindungsgemäßen, mit Kurzglasfasern verstärkten Faserverbund-Werkstoff Luran 378P G7 lediglich eine Biegefestigkeit von 150 MPa gefunden, daher eine deutlich niedrigere Biegefestigkeit.

Zusätzlich wurde für die Faserverbund-Werkstoffe die Schlagzähigkeit bzw. das Durchstoßverhalten (Dart Test nach ISO 6603) ermittelt. Auch hier zeigten die Faserverbund-Werkstoffe eine hohe Stabilität von Fm >3000 N.

### Optionale Weiterverarbeitung

Es konnte auch experimentell gezeigt werden, dass die erhaltenen Faserverbund-Werkstoffe gut zu dreidimensionalen Halbzeugen umformbar waren, wie beispielsweise zu halbschalenförmigen Halbzeugen. Es zeigte sich zudem, dass die erhaltenen Faserverbund-Werkstoffe bedruckbar und kaschierbar waren.

### Zusammenfassung der Versuchsergebnisse

Die Evaluierung von unterschiedlichen Textilsystemen auf Glasfaserbasis mit unterschiedlichen Matrixsystemen zu einem Faserverbund-Werkstoff (Organoblech) hat gezeigt, dass gute Faserverbund-Werkstoffe (als Organobleche und daraus hergestellten Halbzeugen) reproduzierbar hergestellt werden können. Diese können farblos oder farbig hergestellt werden. Die Faserverbund-Werkstoffe zeigten gute bis sehr gute optische, haptische und mechanische Eigenschaften (etwa bezüglich ihrer Biegefestigkeit und Durchstoßfestigkeit). Mechanisch zeigten die Gewebe etwas größere Festigkeit und Steifigkeit als Gelege. Die Styrol-Copolymer-basierten Matrices (SAN-Matrices) führten tendenziell zu besseren Faserverbund-Werkstoffen bezüglich der den mechanischen Kennwerte als die alternativen Matrices wie PC und PA6. Die erfindungsgemäßen Faserverbund-Werkstoffe ließen sich halb- bzw. vollautomatisch mittels eines Endlosverfahrens herstellen. Die erfindungsgemäßen Faserverbund-Werkstoffe (Organobleche) lassen sich gut zu dreidimensionalen Halbzeugen umformen.

## Patentansprüche

1. Verfahren zur Herstellung eines thermoplastischen Faserverbund-Werkstoffs enthaltend eine thermoplastischen Formmasse A als Polymer-Matrix M, mindestens eine Lage aus Verstärkungsfasern B, sowie optional mindestens ein Additiv C, umfassend die Schritte:
i) Bereitstellen von Flächengebilden F aus mit einer Silan-Schlichte behandelten Verstärkungsfasern B, wobei das Flächengebilde F ein Gewebe, ein Gelege, eine Matte, ein Vlies oder ein Gewirk ist,
ii) Einbringen der Flächengebilde F in eine thermoplastische Formmasse A, welche mindestens 0,3 Mol-%, bezogen auf Komponente A, einer chemisch reaktiven Funktionalität aufweist,
iii) Reaktion von chemisch reaktiven Gruppen der thermoplastischen Form-masse A in der Polymer-Matrix M mit den polaren Gruppen an der Oberfläche der behandelten Verstärkungsfasern B,
iv) optionale Einarbeitung des mindestens einen Additivs C und Konsolidierung des Faserverbund-Werkstoffs,
v) Abkühlen und ggf. weitere Verfahrensschritte,
wobei die chemisch reaktive Funktionalität der thermoplastischen Formmasse A basiert auf Komponenten ausgewählt aus der Gruppe bestehend aus: Maleinsäureanhydrid, N-Phenylmaleinimid und Glycidyl(meth)acrylat, und
wobei die Schritte (ii) und/oder (iii) durch Anpressen bei Überdruck durchgeführt werden.

2. Verfahren zur Herstellung eines thermoplastischen Faserverbund-Werkstoffs gemäß Anspruch 1, wobei der Faserverbund-Werkstoff hergestellt wird aus
a) 30 bis 95 Gew.-% der thermoplastischen Formmasse A als Polymer-Matrix,
b) 5 bis 70 Gew.-% der Flächengebilde F aus Verstärkungsfasern B, und
c) 0 bis 40 Gew.-%, oftmals 0,1 bis 25 Gew.-% an Additiv C.

3. Verfahren zur Herstellung eines thermoplastischen Faserverbund-Werkstoffs gemäß Anspruch 1 oder 2, wobei die als Polymer-Matrix M eingesetzte thermoplastische Formmasse A amorph ist und ausgewählt ist aus der, durch einer chemisch reaktive Funktionalität modifizierte Gruppe von Copolymeren auf Basis von: Styrol-Acrylnitril-Copolymeren, alpha-Methylstyrol-Acrylnitril-Copolymeren, schlagzäh modifizierte Acrylnitril-Styrol-Copolymere, insbesondere Acrylnitril-Butadien-Styrol-Copolymeren und Acrylnitril-Styrol-Acrylester-Copolymeren, sowie Blends der genannten Copolymere mit Polycarbonat oder Polyamid.

4. Verfahren zur Herstellung eines thermoplastischen Faserverbund-Werkstoffs gemäß einem der Ansprüche 1 bis 3, wobei die thermoplastische Formmasse A besteht aus, durch einer chemisch reaktive Funktionalität, insbesondere Maleinsäureanhydrid (MSA), modifizierte Styrol-Acrylnitril-Copolymeren und/oder alpha-Methylstyrol-Acrylnitril-Copolymeren.

5. Verfahren zur Herstellung eines thermoplastischen Faserverbund-Werkstoffs gemäß einem der Ansprüche 1 bis 4, wobei die Oberfläche der Verstärkungsfasern B eine oder mehrere der Funktionen aus der Gruppe Hydroxy-, Ester- und Amino-Gruppen enthält.

6. Verfahren zur Herstellung eines thermoplastischen Faserverbund-Werkstoffs gemäß einem der Ansprüche 1 bis 5, wobei zur Herstellung von Formmasse A 0,5 bis 5 Gew.-% Monomere A-I, bezogen auf Komponente A, eingesetzt werden, welche eine chemisch reaktive Funktionalität, ausgewählt aus der Gruppe bestehend aus Maleinsäureanhydrid, N-Phenylmaleinimid und Glycidyl(meth)acrylat, aufweisen.

7. Verfahren zur Herstellung eines thermoplastischen Faserverbund-Werkstoffs gemäß einem der Ansprüche 1 bis 5, wobei Komponente A hergestellt wird aus 65 bis 80 Gew.-% (α-Methyl)Styrol, 19,7 bis 32 Gew.-% Acrylnitril und 0,3 bis 3 Gew.-% Maleinsäureanhydrid.

8. Verfahren zur Herstellung eines thermoplastischen Faserverbund-Werkstoffs gemäß einem der Ansprüche 1 bis 7, wobei die Verstärkungsfasern B aus Glasfasern bestehen, welche als chemisch reaktive Funktionalität Silanolgruppen an der Oberfläche enthalten.

9. Verfahren zur Herstellung eines thermoplastischen Faserverbund-Werkstoffs gemäß einem der Ansprüche 1 bis 8, wobei der Faserverbund-Werkstoff eine Verrippung oder einen Sandwichaufbau aufweist.

10. Verfahren zur Herstellung eines thermoplastischen Faserverbund-Werkstoffs gemäß einem der Ansprüche 1 bis 9, wobei der Faserverbund-Werkstoff schichtartig aufgebaut ist und mehr als zwei Schichten enthält.

11. Verfahren zur Herstellung eines thermoplastischen Faserverbund-Werkstoffs gemäß einem der Ansprüche 1 bis 10, wobei die Temperatur bei der Herstellung des Faserverbund-Werkstoffs mindestens 200 °C, bevorzugt mindestens 250 °C und besonders bevorzugt mindestens 300 °C beträgt.

12. Verfahren zur Herstellung eines thermoplastischen Faserverbund-Werkstoffs gemäß einem der Ansprüche 1 bis 11, wobei die Verweildauer bei der Herstellung des Faserverbund-Werkstoffs bei Temperaturen von mindestens 200 °C bei maximal 10 Minuten, bevorzugt maximal 5 Minuten, besonders bevorzugt maximal 2 Minuten und insbesondere bei maximal 1 Minute liegt.

13. Verfahren zur Herstellung eines thermoplastischen Faserverbund-Werkstoffs gemäß einem der Ansprüche 1 bis 12, wobei Komponente A hergestellt wird aus 65 bis 80 Gew.-% (a-Methyl)Styrol,
19,9 bis 32 Gew.-% Acrylnitril und
0,1 bis 3 Gew.-% Maleinsäureanhydrid,
wobei das Flächengebildes F ein Gelege, ein Gewebe, eine Matte, ein Vliese oder ein Gewirke ist, und
wobei die Verweildauer zur Herstellung des Faserverbund-Werkstoffs bei Temperaturen von mindestens 200 °C bei maximal 10 Minuten liegt.

14. Faserverbund-Werkstoff, hergestellt gemäß einem der Ansprüche 1 bis 13.

15. Verwendung eines Faserverbund-Werkstoffs gemäß Anspruch 14 zur Herstellung von Formkörpern, Folien und Beschichtungen.

## Claims

1. Process for producing a thermoplastic fibre composite material comprising a thermoplastic moulding compound A as polymer matrix M, at least one ply of reinforcing fibres B, and optionally at least one additive C, comprising the steps of:
i) providing sheetlike structures F composed of reinforcing fibres B treated with a silane size, where the sheetlike structure F is a weave, a scrim, a mat, a nonwoven or a knit,
ii) introducing the sheetlike structures F into a thermoplastic moulding compound A having at least 0.3 mol%, based on component A, of a chemically reactive functionality,
iii) reacting chemically reactive groups in the thermoplastic moulding compound A in the polymer matrix M with the polar groups at the surface of the treated reinforcing fibres B,
iv) optionally incorporating the at least one additive C and consolidating the fibre composite material,
v) cooling and optionally further process steps,
wherein the chemically reactive functionality of the thermoplastic moulding compound A is based on components selected from the group consisting of: maleic anhydride, N-phenylmaleimide and glycidyl (meth)acrylate, and wherein steps (ii) and/or (iii) are performed by compression attachment at elevated pressure.

2. Process for producing a thermoplastic fibre composite material according to Claim 1, wherein the fibre composite material is produced from
a) 30% to 95% by weight of the thermoplastic moulding compound A as polymer matrix,
b) 5% to 70% by weight of the sheetlike structures F composed of reinforcing fibres B, and
c) 0% to 40% by weight, often 0.1% to 25% by weight, of additive C.

3. Process for producing a thermoplastic fibre composite material according to Claim 1 or 2, wherein the thermoplastic moulding compound A used as polymer matrix M is amorphous and is selected from the group of copolymers modified by a chemically reactive functionality that are based on: styrene-acrylonitrile copolymers, alpha-methylstyrene-acrylonitrile copolymers, impact-modified acrylonitrile-styrene copolymers, especially acrylonitrile-butadiene-styrene copolymers and acrylonitrile-styrene-acrylic ester copolymers, and blends of the copolymers mentioned with polycarbonate or polyamide.

4. Process for producing a thermoplastic fibre composite material according to any of Claims 1 to 3, wherein the thermoplastic moulding compound A consists of styrene-acrylonitrile copolymers and/or alpha-methylstyrene acrylonitrile copolymers that have been modified by a chemically reactive functionality, especially maleic anhydride (MA).

5. Process for producing a thermoplastic fibre composite material according to any of Claims 1 to 4, wherein the surface of the reinforcing fibres B comprises one or more of the functions from the group of hydroxyl, ester and amino groups.

6. Process for producing a thermoplastic fibre composite material according to any of Claims 1 to 5, wherein moulding compound A is produced using 0.5% to 5% by weight of monomers A-I, based on component A, which have a chemically reactive functionality selected from the group consisting of: maleic anhydride, N-phenylmaleimide and glycidyl (meth)acrylate.

7. Process for producing a thermoplastic fibre composite material according to any of Claims 1 to 5, wherein component A is prepared from 65% to 80% by weight of (α-methyl)styrene, 19.7% to 32% by weight of acrylonitrile and 0.3% to 3% by weight of maleic anhydride.

8. Process for producing a thermoplastic fibre composite material according to any of Claims 1 to 7, wherein the reinforcing fibres B consist of glass fibres comprising silanol groups on the surface as chemically reactive functionality.

9. Process for producing a thermoplastic fibre composite material according to any of Claims 1 to 8, wherein the fibre composite material has a ribbed structure or a sandwich structure.

10. Process for producing a thermoplastic fibre composite material according to any of Claims 1 to 9, wherein the fibre composite material has a layered structure and comprises more than two layers.

11. Process for producing a thermoplastic fibre composite material according to any of Claims 1 to 10, wherein the temperature in the production of the fibre composite material is at least 200°C, preferably at least 250°C and more preferably at least 300°C.

12. Process for producing a thermoplastic fibre composite material according to any of Claims 1 to 11, wherein the residence time in the production of the fibre composite material at temperatures of at least 200°C is not more than 10 minutes, preferably not more than 5 minutes, more preferably not more than 2 minutes and especially not more than 1 minute.

13. Process for producing a thermoplastic fibre composite material according to any of Claims 1 to 12, wherein component A is produced from
65% to 80% by weight of (a-methyl)styrene,
19.9% to 32% by weight of acrylonitrile and
0.1% to 3% by weight of maleic anhydride,
wherein the sheetlike structure F is a scrim, a weave, a mat, a nonwoven or a knit, and
wherein the residence time for production of the fibre composite material at temperatures of at least 200°C is not more than 10 minutes.

14. Fibre composite material produced according to any of Claims 1 to 13.

15. Use of a fibre composite material according to Claim 14 for production of mouldings, films and coatings.

## Revendications

1. Procédé pour la préparation d'un matériau composite fibreux thermoplastique contenant une masse à mouler thermoplastique A en tant que matrice de polymère M, au moins une couche composée de fibres de renforcement B, ainsi qu'éventuellement au moins un additif C, comprenant les étapes :
i) mise à disposition de structures planes F composées de fibres de renforcement B traitées avec un enduit au silane, la structure plane F étant un tissu, une nappe, un mat, un non-tissé ou une étoffe,
ii) introduction des structures planes F dans une masse à mouler thermoplastique A, qui présente au moins 0,3 % en moles, par rapport au composant A, d'une fonctionnalité chimiquement réactive,
iii) réaction de groupes chimiquement réactifs de la masse à mouler thermoplastique A dans la matrice de polymère M avec les groupes polaires au niveau de la surface des fibres de renforcement B traitées,
iv) incorporation éventuelle de l'au moins un additif C et consolidation du matériau composite fibreux,
v) refroidissement et éventuellement d'autres étapes de procédé,
la fonctionnalité chimiquement réactive de la masse à mouler thermoplastique A étant à base de composants choisis dans le groupe constitué par : l'anhydride maléique, le N-phénylmaléimide et un (méth)acrylate de glycidyle, et
les étapes (ii) et/ou (iii) étant mises en œuvre par pressage en surpression.

2. Procédé pour la préparation d'un matériau composite fibreux thermoplastique selon la revendication 1, le matériau composite fibreux étant préparé à partir de
a) 30 à 95 % en poids de la masse à mouler thermoplastique A en tant que matrice de polymère,
b) 5 à 70 % en poids des structures planes F composées de fibres de renforcement B, et
c) 0 à 40 % en poids, souvent 0,1 à 25 % en poids d'additif C.

3. Procédé pour la préparation d'un matériau composite fibreux thermoplastique selon la revendication 1 ou 2, la masse à mouler thermoplastique A utilisée en tant que matrice de polymère M étant amorphe et étant choisie dans le groupe de copolymères modifiés par une fonctionnalité chimiquement réactive à base de : copolymères de styrène-acrylonitrile, copolymères d'alpha-méthylstyrène-acrylonitrile, copolymères d'acrylonitrile-styrène à résistance aux chocs modifiée, en particulier des copolymères d'acrylonitrile-butadiène-styrène et des copolymères d'acrylonitrile-styrène-ester acrylique, ainsi que des mélanges des copolymères mentionnés avec un polycarbonate ou un polyamide.

4. Procédé pour la préparation d'un matériau composite fibreux thermoplastique selon l'une quelconque des revendications 1 à 3, la masse à mouler thermoplastique A étant constituée de copolymères de styrène-acrylonitrile et/ou de copolymères d'alpha-méthylstyrène-acrylonitrile, modifiés par une fonctionnalité chimiquement réactive, en particulier par l'anhydride de l'acide maléique (MSA).

5. Procédé pour la préparation d'un matériau composite fibreux thermoplastique selon l'une quelconque des revendications 1 à 4, la surface des fibres de renforcement B contenant l'une ou plusieurs des fonctions du groupe des groupes hydroxy, ester et amino.

6. Procédé pour la préparation d'un matériau composite fibreux thermoplastique selon l'une quelconque des revendications 1 à 5, dans lequel pour la préparation de la masse à mouler A, 0,5 à 5 % en poids de monomères A-I, par rapport au composant A, sont utilisés, lesquels présentent une fonctionnalité chimiquement réactive choisie dans le groupe constitué par l'anhydride maléique, le N-phénylmaléimide et un (méth)acrylate de glycidyle.

7. Procédé pour la préparation d'un matériau composite fibreux thermoplastique selon l'une quelconque des revendications 1 à 5, le composant A étant préparé à partir de 65 à 80 % en poids de (α-méthyl)styrène, 19,7 à 32 % en poids d'acrylonitrile et 0,3 à 3 % d'anhydride d'acide maléique.

8. Procédé pour la préparation d'un matériau composite fibreux thermoplastique selon l'une quelconque des revendications 1 à 7, les fibres de renforcement B étant constituées de fibres de verre qui contiennent, au niveau de la surface, des groupes silanol en tant que fonctionnalité chimiquement réactive.

9. Procédé pour la préparation d'un matériau composite fibreux thermoplastique selon l'une quelconque des revendications 1 à 8, le matériau composite fibreux présentant un nervurage ou une construction de type sandwich.

10. Procédé pour la préparation d'un matériau composite fibreux thermoplastique selon l'une quelconque des revendications 1 à 9, le matériau composite fibreux étant construit de manière stratifiée et contenant plus de deux couches.

11. Procédé pour la préparation d'un matériau composite fibreux thermoplastique selon l'une quelconque des revendications 1 à 10, la température lors de la préparation du matériau composite fibreux étant d'au moins 200 °C, préférablement d'au moins 250 °C et particulièrement préférablement d'au moins 300 °C.

12. Procédé pour la préparation d'un matériau composite fibreux thermoplastique selon l'une quelconque des revendications 1 à 11, le temps de séjour lors de la préparation du matériau composite fibreux à des températures d'au moins 200 °C étant de maximum 10 minutes, préférablement maximum 5 minutes, particulièrement préférablement maximum 2 minutes et en particulier maximum 1 minute.

13. Procédé pour la préparation d'un matériau composite fibreux thermoplastique selon l'une quelconque des revendications 1 à 12, le composant A étant préparé à partir de
65 à 80 % en poids de (α-méthyl)styrène,
19,9 à 32 % en poids d'acrylonitrile et
0,1 à 3 % d'anhydride d'acide maléique,
la structure plane F étant une nappe, un tissu, un mat, un non-tissé ou une étoffe, et
le temps de séjour pour la préparation du matériau composite fibreux à des températures d'au moins 200 °C étant de maximum 10 minutes.

14. Matériau composite fibreux préparé selon l'une quelconque des revendications 1 à 13.

15. Utilisation d'un matériau composite fibreux selon la revendication 14 pour la préparation de corps moulés, de feuilles et de revêtements.
